# EUROPEAN PATENT SPECIFICATION

(11) **EP 2 053 282 B1**
(45) Date of publication and mention of the grant of the patent: **26.09.2012**
(21) Application number: 08253436.3
(22) Date of filing: 22.10.2008
(51) Int. Cl.: F16H 63/30, F16H 63/22, F16H 63/28

(54) **Manual transmission comprising gear noise prevention system**
Handschaltgetriebe mit Ganggeräuschverhinderungssystem
Transmission manuelle comprenant un système de prévention du bruit d'engrenage

(30) Priority: 25.10.2007 JP 2007277458
(43) Date of publication of application: 29.04.2009
(73) Proprietor: Toyota Jidosha Kabushiki Kaisha, Toyota-shi, Aichi-ken 471-8571 (JP)
(72) Inventor: Nagai, Kazunari, Toyota-shi, Aichi-ken 471-8571 (JP); Naito, Koji, Toyota-shi, Aichi-ken 471-8571 (JP)
(74) Representative: Albutt, Anthony John

(56) References cited:
- EP-A- 0 300 843
- JP-A- 58 170 952
- JP-A- 59 194 135
- JP-U- 4 062 461

## Description

### BACKGROUND OF THE INVENTION

### 1. Field of the Invention

The invention relates generally to a gear noise prevention system for a manual transmission that is mounted in, for example, an automobile. More specifically, the invention relates to a technology for preventing gear noise that is likely to occur when a manual transmission unequipped with a synchromesh mechanism for reverse gear is shifted to reverse gear.

### 2. Description of the Related Art

Many types of vehicle manual transmissions are unequipped with a synchromesh mechanism for reverse gear although being equipped with, synchromesh mechanisms for forward gears for the following reason. Usually, a reverse shift operation for shifting a manual transmission from forward gear to reverse gear is performed under the conditions that a clutch is disengaged and a vehicle is not moving. Therefore, a reverse drive gear provided on an input shaft of a shift mechanism and a reverse driven gear provide on a counter shaft (which may be referred to as "output shaft" in the case of a FF vehicle) are both stopped. Accordingly, it is estimated that an operation for meshing a reverse idler gear, which is not moving, with these gears, which are also not moving, will be performed.

However, even if the clutch is disengaged, the input shaft may rotate under its inertia. Especially, when a reverse shift operation is performed immediately after a vehicle that has been moving forward is brought to a standstill, such situation is likely to occur. Under this situation, if the reverse idler gear is moved in its axial direction in order to mesh the reverse idler gear with the reverse drive gear that is rotating together with the input shaft, the reverse idler gear, which is not moving, is meshed with the reverse drive gear that is rotating. Therefore, the reverse idler gear and the reverse driver gear are not smoothly meshed with each other. As a result, abnormal noise, that is, so-called "reverse shift gear noise" may occur, which brings discomfort to a driver.

In order to prevent occurrence of such reverse shift gear noise, various gear noise prevention systems have been proposed. Some of these gear noise prevention systems execute the gear noise prevention function during a shift operation that is performed after a select operation is performed on a shift lever. With these gear noise prevention systems, an operation for meshing the gears with each other is started immediately after the gear noise prevention function is executed. Therefore, the period during which the gear noise prevention function is executed is excessively short, which may arise a possibility that the performance for preventing gear noise is not delivered sufficiently.

Therefore, gear noise prevention systems that execute the gear noise prevention function when a select operation is performed on a shift lever have been proposed, as described in Japanese Unexamined Utility Model Registration Application Publication No. 5-1059 (JP-U-5-1059) and Japanese Patent Application Publication No. 8-4898 (JP-A-8-4898).

JP-U-5-1059 describes a structure in which a cam plate that has a cam groove is secured to a shift select shaft (referred to as "control rod" in JP-U-5-1059), a pin extends from a side face of a fork shaft (referred to as "shift rod" in JP-U-5-1059) that is used to select forward gear or reverse gear toward the cam plate of the shift select shaft, and an end portion of the pin is slidably fitted in the cam groove.

With this gear noise prevention system, when a select operation is performed to select reverse gear (when an operation for rotating the shift select shaft is performed), the fork shaft is slightly slid toward the position for fifth gear and therefore a synchromesh mechanism for fifth gear is operated. Thus, an input shaft that is rotating under its inertia is connected to an output shaft that stops rotating at the same time that a vehicle stops, and the rotation of the input shaft is slowed down or stopped. In this way, reverse shift gear noise is prevented.

According to JP-A-8-4898, a shift lever fitting groove of a fork shaft that is used to select fifth gear or reverse gear is offset from shift lever fitting grooves of fork shafts that are used to select other forward gears (a fork shaft that is used to select first gear or second gear, and a fork shaft that is used to select third or fourth gear) by a predetermined offset amount along the axial direction. Then, when a select operation is performed to select reverse gear, a shift lever is fitted in the shift lever fitting groove of the fork shaft that is used to select fifth gear or reverse gear, and this fork shaft is slid by an amount corresponding to the above-mentioned offset amount to operate a synchromesh mechanism for fifth gear. In this way, reverse shift gear noise is prevented.

However, with the gear noise prevention system described in JP-U-5-1059, when a driver performs a select operation on the shift lever, the synchromesh mechanism operates only when the shift lever is positioned in a considerably limited range. Then, when the shift lever is completely moved to the reverse gear select position, the operation of the synchromesh mechanism is terminated.

Therefore, with a select operation performed by an average driver, the synchromesh mechanism operates only temporarily. Therefore, the input shaft is connected to the output shaft before the inertial rotation of the input shaft is slowed down sufficiently, which may cause gear noise. That is, if the shift lever is operated by a driver who performs a select operation more quickly, the operation time of the synchromesh mechanism is shorter. In this case, slowing-down of the inertial rotation of the input shaft tends to be insufficient, which increases a possibility that gear noise will occur.

JP-U-5-1059 and JP-A-8-4898 each describe a structure in which an operating force applied to the shift lever by the driver is transferred to the shift select shaft, and the operating force directed in the select direction of the shift select shaft is directly applied to the fork shaft that executes the gear noise prevention function (hereinafter, referred to as "pre-balk fork shaft"). Therefore, a reaction force that is transferred from the pre-balk fork shaft when the reverse shift gear noise prevention mechanism is operated is directly received by the shift select shaft. The shift select shaft is supported in such a manner that the shift select shaft is able to move in the select direction (for example, direction along its axis). Therefore, it is difficult for the shift select shaft to receive, at a sufficient level, the reaction force that is transferred from the pre-balk fork shaft when the reverse shift gear noise prevention mechanism is operated. That is, because there is a possibility that the shift select shaft will be moved by the reaction force when the reverse shift gear noise prevention mechanism is operated, it is difficult for the shift select shaft to receive the reaction force. Accordingly, there is a possibility that the pre-balk fork shaft will not be moved by an amount large enough to execute the gear noise prevention function (amount large enough to operate the synchromesh mechanism). Therefore, there is still a room for improvement in reliability.

JP 59 194135 discloses a manual transmission according to the preamble of claim 1 arranged to inhibit inertial rotation of members of the transmission.

### SUMMARY OF THE INVENTION

The invention is made in light of the above-described circumstances. The invention therefore provides a manual transmission according to claim 1, comprising a gear noise prevention system which reliably prevents occurrence of gear noise by ensuring an operation time long enough and an operation amount large enough to operate a synchromesh mechanism for forward gear when a select operation for selecting reverse gear is performed.

According to the invention, gear noise that is likely to occur during a reverse shift operation is prevented on the following principle. During a reverse shift operation, a rotational force caused by a rotational operation (select operation) of a shift select shaft is transferred as a rotational force to at least one intennediate member, the rotational force transferred to the intermediate member is converted into a traveling force for moving a pre-balk fork shaft (forward gear fork shaft) in the axial direction. Thus, part of synchromesh mechanisms is operated to slow down the rotation of an input shaft. As a result, gear noise is prevented during the reverse shift operation.

Disclosed herein is a gear noise prevention system for a manual transmission that includes a shift select shaft that performs a select operation by rotating about an axis of the shift select shaft and arranged to perform a shift operation by moving in the axial direction of the shift select shaft during a gear-shift operation, a forward gear fork shaft to which the shift select shaft is connected when the shift select shaft performs the select operation so that a predetermined forward gear select position is reached, and which is arranged to move in the axial direction in accordance with the shift operation of the shift select shaft and is arranged to perform a gear-shift operation for selecting a predetermined forward gear while operating a synchromesh mechanism, and a reverse gear shift member to which the shift select shaft is arranged to be connected when the shift select shaft performs the select operation so that a reverse gear select position is reached, and which is arranged to perform a gear-shift operation for selecting reverse gear in accordance with the shift operation of the shift select shaft. The gear noise prevention system includes: a first head member that is arranged to rotate together with the shift select shaft when the shift select shaft performs the select operation for selecting reverse gear; at least one intermediate head member that rotates using a rotational force from the first head member which rotates together with the shift select shaft; and a pre-balk head member that is provided on the forward gear fork shaft, and that is arranged to move the forward gear fork shaft in the axial direction using a rotational force from the intermediate head member, thereby operating the synchromesh mechanism during a period in which the shift select shaft performs the select operation for selecting reverse gear. The intermediate head member is arranged in such a manner that the intermediate head member is moveable in the axial direction of the shift select shaft and when the shift select shaft is returned to a neutral position from a shift position for reverse gear. The intermediate head member is arranged to move in the axial direction by a pressing force that is applied from the first head member to the intermediate head member in the axial direction. The intermediate member is supported by one of the forward gear fork shafts and is independently rotatable relative to the forward gear fork shaft and is independently moveable in the axial direction relative to the forward gear fork shaft.

In the gear noise prevention system described above, a pre-balk pressure applying lug portion that extends outward in the radial direction of the intermediate head member may be provided on the outer periphery of the intermediate head member and a pre-balk pressure-receiving lug portion that extends outward in the radial direction of the pre-balk head member may be provided on the outer periphery of the pre-balk head member in order to convert the rotational force of the intermediate head member into a force that moves the forward gear fork shaft in the axial direction.

With the gear noise prevention system described above, during a shift operation for selecting reverse gear, the first head member rotates in accordance with a select operation (rotational operation) for selecting reverse gear performed by the shift select shaft. The rotational force of the first head member is transferred to the intermediate head member to rotate the intermediate head member. Then, the rotational force of the intermediate head member is converted into a traveling force for moving the forward gear fork shaft in the axial direction by the pre-balk head member. The forward gear fork shaft moves in the axial direction using this traveling force. In accordance with the movement of the forward gear fork shaft, the synchromesh mechanism is operated. At this time, during a period in which the select operation for selecting reverse gear is performed by the shift select shaft, the forward gear fork shaft moves in the axial direction to operate the synchromesh mechanism. When a structure in which the synchromesh mechanism provided on the input shaft of a shifting mechanism is operated is employed, the forward gear is connected to (frictionally contacts) the input shaft via the synchromesh mechanism. That is, the input shaft is connected to the output shaft via the synchromesh mechanism, the forward gear and a gear that is provided on the output shaft in such a manner that the gear rotates together with the output shaft. On the other hand, when a structure in which the synchromesh mechanism that is provided on the output shaft of the shifting mechanism is operated is employed, the forward gear is connected to (frictionally contacts) the output shaft via the synchromesh mechanism. That is, the output shaft is connected to the input shaft via the synchromesh mechanism, the forward gear and a gear that is provided on the input shaft in such a manner that the gear rotates together with the input shaft.

During a shift operation for selecting reverse gear, the vehicle is not moving and the output shaft is also not moving. Therefore, even when the input shaft is rotating under its inertia, the input shaft that is connected to the output shaft is forcibly stopped or slowed down due to an operation of the above-described synchromesh mechanism. Accordingly, it is possible to mesh a reverse idler gear with a reverse drive gear that is provided on the input shaft in such a manner that the reverse drive gear rotates together with the input shaft, when the reverse drive gear is not moving or has been slowed down. As a result, it is possible to smoothly mesh these gears with each other, thereby preventing occurrence of gear noise.

As described above, according to the invention, the rotational force of the shift select shaft is transferred from the first head member to the pre-balk head member via the intermediate head member, and the rotational force is converted into a traveling force directed in the axial direction when the rotational force is transferred from the intermediate head member to the pre-balk head member. A reaction force that is transferred from a pre-balk fork shaft (forward gear fork shaft) when the gear noise prevention system operates is applied to the intermediate head member in the axial direction. However, because the shift select shaft applies a biasing force in the rotational direction to the intermediate head member, the reaction force is not applied directly to the shift select shaft. That is, it is possible to receive, at a sufficient level, the reaction force from the pre-balk fork shaft by restricting the movement of the intermediate head member in the axial direction. Therefore, it is possible to ensure a traveling amount of the pre-balk fork shaft, which is large enough to execute the gear noise prevention function (traveling amount which is large enough to operate the synchromesh mechanism). As a result, it is possible to enhance reliability of the gear noise prevention function.

Because the gear noise prevention function is executed during a select operation performed on a shift lever, the gear noise prevention function is executed for a long time. Therefore, it is possible to sufficiently slow down the inertial rotation of the input shaft, thereby reliably preventing occurrence of gear noise.

A concrete example of the structure in which the intermediate head member receives the reaction force that is transferred from the pre-balk fork shaft when the gear noise prevention system operates will be described below. The gear noise prevention system may be provided with a stopper. When the rotational force is applied from the intermediate head member to the pre-balk head member to move the forward gear fork shaft in the axial direction, the stopper restricts the movement of the intermediate head member in the axial direction that is the direction of application of the reaction force from the pre-balk head member so that the intermediate head member receives the reaction force from the pre-balk head member.

That is, the movement of the intermediate head member in the axial direction in which the reaction force (reaction force that is transferred from the pre-balk head member when the gear noise prevention function operates) is applied is prevented by the stopper. Therefore, when the rotational force from the intermediate head member is converted into the traveling force for moving the pre-balk head member in the axial direction, the entirety of the obtained traveling force is used to move the forward gear fork shaft (hereinafter, referred to as "pre-balk fork shaft" where appropriate) in the axial direction. Therefore, it is possible to move the pre-balk fork shaft by a traveling amount large enough to execute the gear noise prevention function (traveling amount large enough to operate the synchromesh mechanism).

With the gear noise prevention system according to the invention, the synchromesh mechanism is operated only during the period in which the shift select shaft performs the select operation for selecting reverse gear, and the operation of the synchromesh mechanism is terminated when the shift select shaft performs the shift operation for selecting the reverse gear. The following structure may be employed to operate the synchromesh mechanism in the above-described manner. With the structure, during the gear-shift operation for selecting reverse gear, when the shift select shaft performs the shift operation so that the reverse gear shift position is reached, the first head member moves in the axial direction in accordance with the movement of the shift select shaft in the axial direction, the movement of the first head member in the axial direction causes the first head member to retract from the intermediate head member in the axial direction to terminate application of the rotational force to the intermediate head member, and application of a biasing force from the intermediate head member to the pre-balk head member to move the forward gear fork shaft in the axial direction is also terminated.

As described above, because the operation of the synchromesh mechanism is terminated at substantially the same time that the select operation for selecting the reverse gear performed by the shift select shaft is completed, the synchromesh mechanism is returned to the neutral position when reverse gear is selected. Thus, it is possible to minimize the operation time of the synchromesh mechanism, thereby minimizing adverse effects (e.g. increase in the amount of heat generated) that may be caused by the long-time operation of the synchromesh mechanism.

In this case, the gear noise prevention system may be provided with biasing means for supplying the intermediate head member with a biasing force for moving the intermediate head member toward the initial position in the rotational direction, at which the rotational force from the first head member is not applied to the intermediate head member, and a biasing force for moving the intermediate head member toward the initial position in the axial direction, at which the pressing force in the axial direction from the first head member is not applied to the intermediate head member.

Thus, when the shift select shaft is returned from the shift position for reverse gear to the intermediate position, the intermediate head member is only moved in the axial direction, and a rotational force is not transferred from the intermediate head member to the pre-balk head member. That is, because the pre-balk head member does not move the forward gear fork shaft in the axial direction the synchromesh mechanism does not operate and only the intermediate head member moves in accordance with the movement of the shift select shaft in the axial direction. Therefore, the shift load is alleviated, and, therefore, the operational feeling that the driver feels when operating the shift lever does not deteriorate. In addition, if the biasing means is provided, it is possible to return the intermediate head member to the initial position quickly, thereby enhancing the response of the operation of the intermediate head member.

According to the invention, during a reverse shift operation, the rotational force caused by the rotational operation (select operation) of the shift select shaft is converted into the traveling force for moving the pre-balk fork shaft in the axial direction. Thus, part of the synchromesh mechanisms is operated to slow down the rotation of the input shaft. As a result, gear noise that is likely to occur during a reverse shift operation is prevented. Therefore, a reaction force that is transferred from the pre-balk fork shaft when the reverse shift gear noise prevention system operates is not applied to directly to the shift select shaft. Therefore, it is possible to receive the reaction force, at a sufficient level, for example, by restricting the movement of intermediate head member in the axial direction. Accordingly, it is possible to ensure a traveling amount that is large enough to execute the gear noise prevention function (traveling amount that is large enough to operate the synchromesh mechanism). As a result, it is possible to enhance reliability of the gear noise prevention function.

### BRIEF DESCRIPTION OF THE DRAWINGS

The features, advantages and technical and industrial significance of this invention will be described in the following detailed description of an example embodiment of the invention with reference to the accompanying drawings, wherein the same or corresponding portions are denoted by the same reference numerals and wherein:
FIG. 1 is a cross-sectional view showing a gear layout of a manual transmission according to an embodiment of the invention;
FIG. 2 is a view schematically showing a shift pattern for a 6-speed manual transmission;
FIG. 3 is a cross-sectional view showing forward-gear engagement portions and a portion near the forward gear engagement portions in a select-shift mechanism, taken along a plane that is perpendicular to the axis of a shift select shaft;
FIG 4 is a cross-sectional view showing a portion at which a fifth gear-sixth gear fork shaft is meshed with a third synchromesh mechanism;
FIG 5 is a cross-sectional view showing a gear noise prevention system, shift forks and a portion near the shift forks, taken along a plane that is perpendicular to the axis of the shift select shaft;
FIG. 6 is a side view showing a third gear-fourth gear fork shaft at a portion near a position at which a second head is provided;
FIG. 7A to FIG 7C are views showing the state before a reverse shift operation is performed, wherein FIG. 7A is a cross-sectional view of the gear noise prevention system taken along a plane that is perpendicular to the axis of the shift select shaft, FIG. 7B is a view showing the positional relationship between the second head and a third head viewed in the direction of an arrow B in FIG 7A, and FIG 7C is a view showing the positional relationship between an arm portion of a shift inner lever and each pair of heads;
FIG. 8A to FIG. 8C are views showing the state at the early stage of the reverse shift operation, FIG. 8A, FIG. 8B and FIG. 8C corresponding to FIG. 7A, FIG. 7B and FIG. 7C, respectively;
FIG 9A to FIG 9C are views showing the state when a first head has been rotated from the position in FIG 8A, FIG. 9A, FIG. 9B and FIG. 9C corresponding to FIG. 7A, FIG. 7B and FIG 7C, respectively;
FIG 10A to FIG 10C are views showing the state when the first head has been further rotated from the position in FIG. 9A, FIG. 10A, FIG. 10B and FIG. 10C corresponding to FIG. 7A, FIG. 7B and FIG. 7C, respectively;
FIG 11A to FIG. 11C are views showing the state when a shift operation for placing a shift lever in the reverse position is performed, FIG 11A, FIG. 11B and FIG. 11C corresponding to FIG. 7A, FIG. 7B and FIG. 7C, respectively; and
FIG. 12A to FIG. 12C are view showing the state when an operation for shifting out of reverse gear is started, FIG. 12A, FIG. 12B and FIG. 12C corresponding to FIG. 7A, FIG. 7B and FIG 7C, respectively.

### DETAILED DESCRIPTION OF THE EXAMPLE EMBODIMENT

An example embodiment of the invention will be described in greater detail below with reference to the accompanying drawings.

In the embodiment, the invention is applied to a synchromesh manual transmission having six forward gears and one reverse gear, which is mounted in a front-engine front-drive (FF) vehicle.

### Gear layout of manual transmission

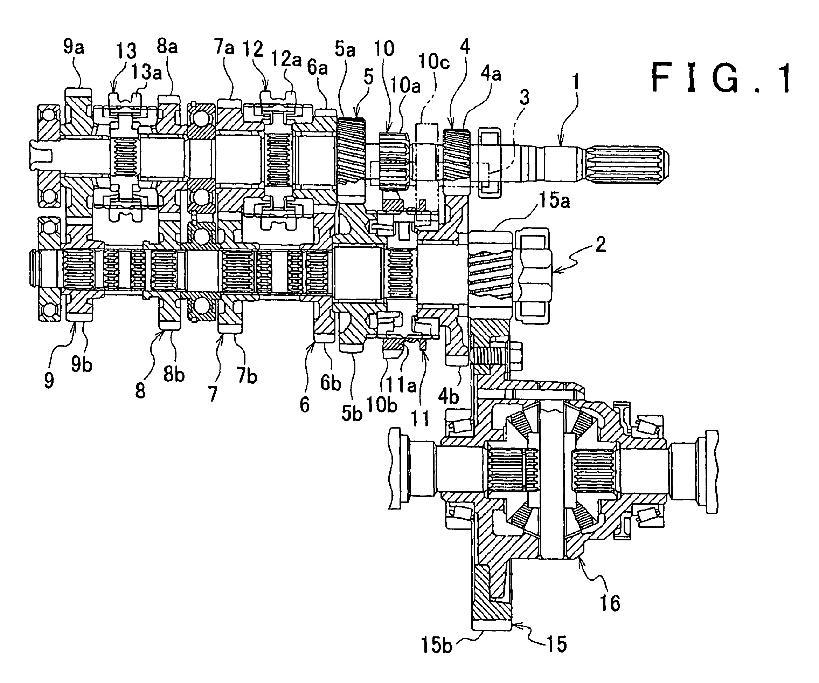

FIG 1 is a side view showing the cross-section of a part of a gear layout of a manual transmission according to the embodiment of the invention. As shown in the gear layout in FIG. 1, an input shaft 1, an output shaft 2 and a reverse shaft 3 (indicated by a two-dot chain line in FIG 1), which are housed in a transmission case (not shown) and which are arranged in parallel with each other, are rotatably supported by the transmission case.

The input shaft 1 is connected to a crankshaft of an engine (not shown) via a clutch mechanism. When the clutch mechanism is engaged, a rotational drive power from the engine is input in the input shaft 1.

Multiple gear trains 4 to 10 that are used to select forward gears from first gear to sixth gear and reverse gear are provided between the input shaft 1 and the output shaft 2. More specifically, as gear trains for forward gears, the first gear train 4, the second gear train 5, the third gear train 6, the fourth gear train 7, the fifth gear train 8 and the sixth gear train 9 are arranged in this order from the right side to the left side in the axial direction of the input shaft 1, the output shaft 2 and the reverse shaft in FIG. 1. As the gear train for reverse gear, reverse gear train 10 is provided.

The first gear train 4 includes a first drive gear 4a that is fitted to the input shaft 1 in such a manner that the first drive gear 4a rotates together with the input shaft 1, and a first driven gear 4b that is fitted to the output shaft 2 in such a manner that the first driven gear 4b rotates relative to the output shaft 2. The first drive gear 4a and the first driven gear 4b are meshed with each other.

The second gear train 5 includes a second drive gear 5a that is fitted to the input shaft 1 in such a manner that the second drive gear 5a rotates together with the input shaft 1, and a second driven gear 5b that is fitted to the output shaft 2 in such a manner that the second driven gear 5b rotates relative to the output shaft 2. The second drive gear 5a and the second driven gear 5b are meshed with each other.

The third gear train 6 includes a third drive gear 6a that is fitted to the input shaft 1 in such a manner that the third drive gear 6a rotates relative to the input shaft 1, and a third driven gear 6b that is fitted to the output shaft 2 in such a manner that the third driven gear 6b rotates together with the output shaft 2. The third drive gear 6a and the third driven gear 6b are meshed with each other.

The fourth gear train 7 includes a fourth drive gear 7a that is fitted to the input shaft 1 in such a manner that the fourth drive gear 7a rotates relative to the input shaft 1, and a fourth driven gear 7b that is fitted to the output shaft 2 in such a manner that the fourth driven gear 7b rotates together with the output shaft 2. The fourth drive gear 7a and the fourth driven gear 7b are meshed with each other.

The fifth gear train 8 includes a fifth drive gear 8a that is fitted to the input shaft 1 in such a manner that the fifth drive gear 8a rotates relative to the input shaft 1, and a fifth driven gear 8b that is fitted to the output shaft 2 in such a manner that the fifth driven gear 8b rotates together with the output shaft 2. The fifth drive gear 8a and the fifth driven gear 8b are meshed with each other.

The sixth gear train 9 includes a sixth drive gear 9a that is fitted to the input shaft 1 in such a manner that the sixth drive gear 9a rotates relative to the input shaft 1, and a sixth driven gear 9b that is fitted to the output shaft 2 in such a manner that the sixth driven gear 9b rotates together with the output shaft 2. The sixth drive gear 9a and the sixth driven gear 9b are meshed with each other.

An operation for switching the shift gear trains (shift operation) is performed by three synchromesh mechanisms 11, 12 and 13. In the embodiment of the invention, known double cone-type synchromesh mechanisms are used.

The first synchromesh mechanism 11 is provided on the output shaft 2 at a position between the first driven gear 4b and the second driven gear 5b. That is, when the first synchromesh mechanism 11 is moved to the first driven gear 4b and the rotation of the first synchromesh mechanism 11 is synchronized with the rotation of the first driven gear 4b, the first driven gear 4b is connected to the output shaft 2 in such a manner that the first driven gear 4b rotates together with the output shaft 2. As a result, power is transferred from the first drive gear 4a to the first driven gear 4b, whereby the power is transferred from the input shaft 1 to the output shaft 2 (first gear is selected). On the other hand, when the first synchromesh mechanism 11 is moved to the second driven gear 5b and the rotation of the first synchromesh mechanism 11 is synchronized with the rotation of the second driven gear 5b, the second driven gear 5b is connected to the output shaft 2 in such a manner that the second driven gear 5b rotates together with the output shaft 2. As a result, power is transferred from the second drive gear 5a to the second driven gear 5b, whereby the power is transferred from the input shaft 1 to the output shaft 2 (second gear is selected).

The second synchromesh mechanism 12 is provided on the input shaft 1 at a position between the third drive gear 6a and the fourth drive gear 7a. That is, when the second synchromesh mechanism 12 is moved to the third drive gear 6a and the rotation of the second synchromesh mechanism 12 is synchronized with the rotation of the third drive gear 6a, the third drive gear 6a is connected to the input shaft 1 in such a manner that the third drive gear 6a rotates together with the input shaft 1. As a result, power is transferred from the third drive gear 6a to the third driven gear 6b, whereby the power is transferred from the input shaft 1 to the output shaft 2 (third gear is selected). On the other hand, when the second synchromesh mechanism 12 is moved to the fourth drive gear 7a and the rotation of the second synchromesh mechanism 12 is synchronized with the rotation of the fourth drive gear 7a, the fourth drive gear 7a is connected to the input shaft 1 in such a manner that the fourth drive gear 7a rotates together with the input shaft 1. As a result, power is transferred from the fourth drive gear 7a to the fourth driven gear 7b, whereby the power is transferred from the input shaft 1 to the output shaft 2 (fourth gear is selected).

The third synchromesh mechanism 13 is provided on the input shaft 1 at a position between the fifth drive gear 8a and the sixth drive gear 9a. That is, when the third synchromesh mechanism 13 is moved to the fifth drive gear 8a and the rotation of the third synchromesh mechanism 13 is synchronized with the rotation of the fifth drive gear 8a, the fifth drive gear 8a is connected to the input shaft 1 in such a manner that the fifth drive gear 8a rotates together with the input shaft 1. As a result, power is transferred from the fifth drive gear 8a to the fifth driven gear 8b, whereby the power is transferred from the input shaft 1 to the output shaft 2 (fifth gear is selected). On the other hand, when the third synchromesh mechanism 13 is moved to the sixth drive gear 9a and the rotation of the third synchromesh mechanism 13 is synchronized with the rotation of the sixth drive gear 9a, the sixth drive gear 9a is connected to the input shaft 1 in such a manner that the sixth drive gear 9a rotates together with the input shaft 1. As a result, power is transferred from the sixth drive gear 9a to the sixth driven gear 9b, whereby the power is transferred from the input shaft 1 to the output shaft 2 (sixth gear is selected).

As described above, when the vehicle moves forward, the rotational drive power from the input shaft 1 is transferred to the output shaft 2 via one of the shift gear trains 4 to 9 that is selected by operating one of the above-described synchromesh mechanisms 11, 12 and 13 except when a shift change operation is performed. Note that, the synchromesh mechanisms 11, 12 and 13 are not limited to double cone synchromesh mechanisms, and other types of synchromesh mechanisms may be used as the synchromesh mechanisms 11, 12 and 13.

The reverse gear train 10 includes a reverse drive gear 10a that is fitted to the input shaft 1 in such a manner that the reverse drive gear 10a rotates together with the input shaft 1, a reverse driven gear 10b that is fitted to the output shaft 2 in such a manner that the reverse driven gear 10b rotates together with the output shaft 2, and a reverse idler gear 10c that is slidably fitted to the reverse shaft 3 (indicated by a two-dot chain line in FIG 1). These gears 10a, 10b and 10c do not transfer drive power when the vehicle moves forward. When the vehicle backs up, all the synchromesh mechanisms 11, 12 and 13 are placed in the neutral state. When the reverse idler gear 10c is moved along the axial direction of the reverse shaft 3 to be meshed with both the reverse drive gear 10a and the reverse driven gear 10b, the rotational direction of the reverse drive gear 10a is reversed and the rotation in the reversed direction is transferred to the reverse driven gear 10b. As a result, the output shaft 2 rotates in the direction opposite to the rotational direction when one of the above-described forward gears is selected, and drive wheels are rotated in such a direction that the vehicle backs up. The reverse driven gear 10b is provided on the outer periphery of the first synchromesh mechanism 11 in such a manner that the reverse driven gear 10b rotates together with the first synchromesh mechanism 11.

The rotation, which is transferred to the output shaft 2 after its rotational speed is changed at a predetermined ratio or after the rotational direction is reversed, is transferred to a differential unit 16 after its rotational speed is reduced at a final reduction ratio of a final reduction gear train 15 that includes a final drive gear 15a and a final driven gear 15b. Thus, the drive wheels (not shown) rotate in such a direction that the vehicle moves forward or in such a direction that the vehicle backs up.

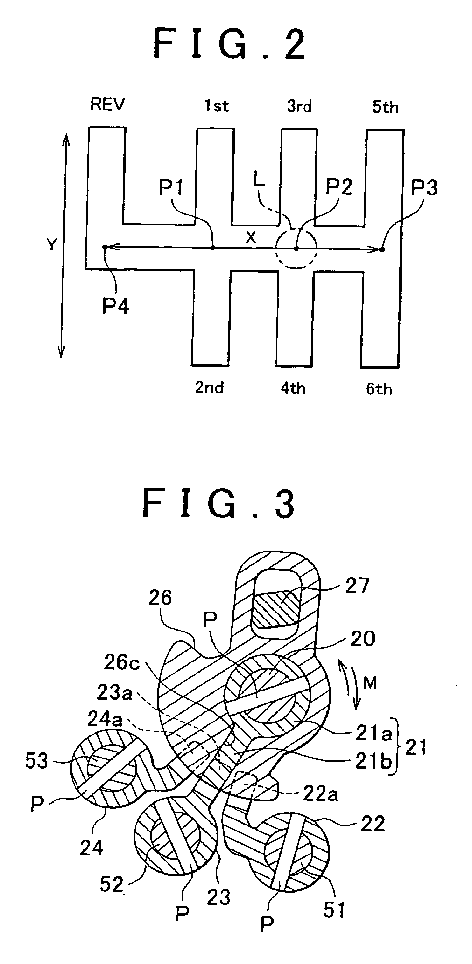

FIG. 2 schematically shows a shift pattern (shape of a shift gate) of the 6-speed manual transmission according to the embodiment of the invention. A shift lever L that is indicated by a two-dot chain line in FIG 2 is formed in a such a shape that a select operation is able to be performed in the direction indicated by an arrow X (hereinafter, referred to as "select operation direction" where appropriate) and a shift operation is able to be performed in the direction indicated by an arrow Y that is perpendicular to the select operation direction (hereinafter, referred to as "shift operation direction" where appropriate).

A first gear-second gear select position P1, a third gear-fourth gear select portion P2, a fifth gear-sixth gear select position P3 and a reverse select position P4 are aligned in line in the select operation direction.

When a shift operation (operation in the direction of the arrow Y) is performed at the first gear-second gear select position P1, the shift lever 1 is moved to a first gear position 1st or a second gear position 2nd. When the shift lever L is moved to the first gear position 1st, the first synchromesh mechanism 11 is moved to the first driven gear 4b and the rotation of the first synchromesh mechanism 11 is synchronized with the rotation of the first driven gear 4b. As a result, the first driven gear 4b is connected to the output shaft 2 in such a manner that the first driven gear 4b rotates together with the output shaft 2. On the other hand, when the shift lever L is moved to the second gear position 2nd, the first synchromesh mechanism 11 is moved to the second driven gear 5b and the rotation of the first synchromesh mechanism 11 is synchronized with the rotation of the second driven gear 5b. As a result, the second driven gear 5b is connected to the output shaft 2 in such a manner that the second driven gear 5b rotates together with the output shaft 2.

Similarly, when a shift operation is performed at the third gear-fourth gear select position P2, the shift lever 1 is moved to a third gear position 3rd or a fourth gear position 4th. When the shift lever L is moved to the third gear position 3rd, the second synchromesh mechanism 12 is moved to the third drive gear 6a and the rotation of the second synchromesh mechanism 12 is synchronized with the rotation of the third drive gear 6a. As a result, the third drive gear 6a is connected to the input shaft 1 in such a manner that the third drive gear 6a rotates together with the input shaft 1. On the other hand, when the shift lever L is moved to the fourth gear position 4th, the second synchromesh mechanism 12 is moved to the fourth drive gear 7a and the rotation of the second synchromesh mechanism 12 is synchronized with the rotation of the fourth drive gear 7a. As a result, the fourth drive gear 7a is connected to the input shaft 1 in such a manner that the fourth drive gear 7a rotates together with the input shaft 1.

When a shift operation is performed at the fifth gear-sixth gear select position P3, the shift lever L is moved to a fifth gear position 5th or a sixth gear position 6th. When the shift lever L is moved to the fifth gear position 5th, the third synchromesh mechanism 13 is moved to the fifth drive gear 8a and the rotation of the third synchromesh mechanism 13 is synchronized with the rotation of the fifth drive gear 8a. As a result, the fifth drive gear 8a is connected to the input shaft 1 in such a manner that the fifth drive gear 8a rotates together with the input shaft 1. On the other hand, when the shift lever L is operated to the sixth gear position 6th, the third synchromesh mechanism 13 is moved to the sixth drive gear 9a and the rotation of the third synchromesh mechanism 13 is synchronized with the rotation of the sixth drive gear 9a. As a result, the sixth drive gear 9a is connected to the input shaft 1 in such a manner that the sixth drive gear 9a rotates together with the input shaft 1.

When a shift operation is performed at the reverse select position P4, the shift lever L is moved to a reverse position REV When the shift lever L is moved to the reverse position REV, all the synchromesh mechanisms 11, 12 and 13 are placed in the neutral state, and the reverse idler gear 10c is moved along the axial direction of the reverse shaft 3. As a result, the reverse idler gear 10c is meshed with the reverse drive gear 10a and the reverse driven gear 10b.

Next, a description will be provided concerning a select-shift mechanism that selectively transfers a force applied to the shift lever L to the synchromesh mechanisms 11, 12 and 13 and the reverse idler gear 10c in order to select one of the forward gears from first gear to sixth gear and reverse gear.

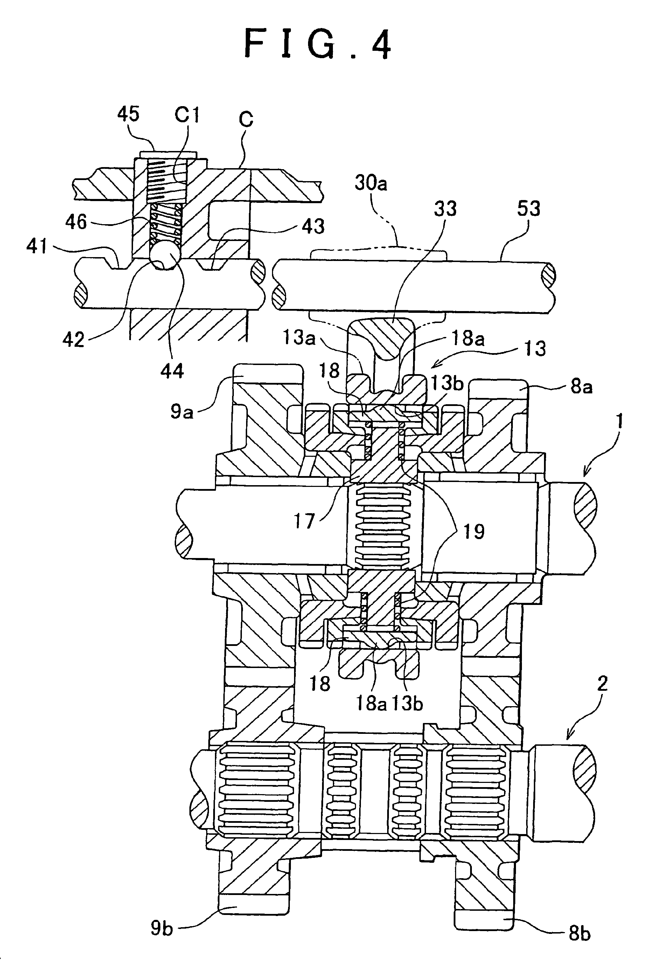

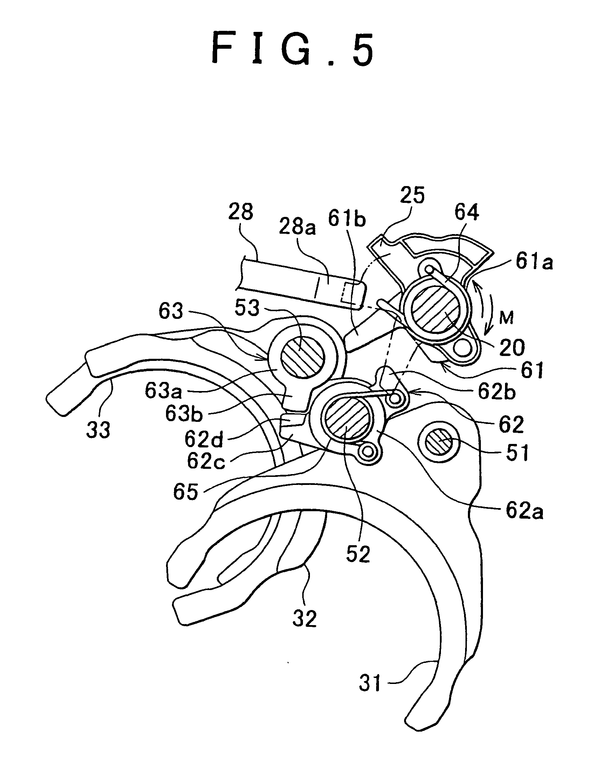

FIG 3 is a cross-sectional view showing forward-gear engagement portions 22, 23, and 24 and a portion near the forward gear engagement portions 22, 23 and 24 in the select-shift mechanism, taken along a plane that is perpendicular to the axis of a shift select shaft 20. In FIG 3, the reference numeral 22 denotes the forward gear engagement portion for first gear and second gear, which is provided on a first gear-second gear fork shaft 51, the reference numeral 23 denotes the forward gear engagement portion for third gear and fourth gear, which is provided on a third gear-fourth gear fork shaft 52, and the reference numeral 24 denotes the forward gear engagement portion for fifth gear and sixth gear, which is provided on a fifth gear-sixth gear fork shaft 53. FIG 4 is a cross-sectional view showing a portion at which the fifth gear-sixth gear fork shaft 53 and the third synchromesh mechanism 13 are engaged with each other. FIG 5 is a cross-sectional view showing shift forks 31, 32 and 33 that are provided on the fork shafts 51, 52 and 53, respectively, and a portion near these components, taken along the plane that is perpendicular to the axis of the shift select shaft 20.

As shown in these figures, in the select-shift mechanism, the shift lever L is connected to the shift select shaft 20 via a select cable (not shown) and a shift cable (not shown) so that a force applied to the shift lever L is transferred to the shift select shaft 20 (see FIGs. 3 and 5) via the select cable and the shift cable. Thus, the shift select shaft 20 rotates about its axis (in the direction shown by an arrow M in FIGs. 3 and 5) in response to a select operation performed on the shift lever L, and the shift select shaft 20 is slid in its axial direction (in the direction perpendicular to the sheets on which FIG 3 and FIG 5 are drawn) in response to a shift operation performed on the shift lever L. That is, a select operation force applied to the shift lever L (operation force applied to the shit lever L in the direction indicated by the arrow X in FIG 2) is transferred via the select cable as a rotational force about the axis of the shift select shaft 20, and a shift operation force applied to the shift lever L (operation force applied in the direction indicated by the arrow Y in FIG 2) is transferred via the shift cable as a sliding force in the axial direction of the shift select shaft 20. A reference numeral 27 in FIG 3 denotes a select inner lever that receives a select operation force applied to the shift lever L via the select cable and supplies the shift select shaft 20 with a rotational force about its axis.

The shift forks 31, 32 and 33 that are arranged for sleeves 11a, 12a, and 13a included in the synchromesh mechanisms 11, 12 and 13 are engaged with the sleeves 11a, 12a, and 13a, respectively (in FIG 4, only the fifth gear-sixth gear shift fork 33 from among the three shift forks 31, 32 and 33 is shown). The center portions of the shift forks 31, 32 and 33 are supported by the forward gear fork shafts 51, 52, and 53 that are provided for the shift forks 31, 32, and 33, respectively (in FIG 4, only the fifth gear-sixth gear fork shaft 53 from among the three fork shafts 51, 52 and 53 is shown). One of the fork shafts 51, 52 and 53 is selected by rotating the shift select shaft 20 about its axis in response to a select operation performed on the shift lever L so that a shift operation force is able to be transferred, and the selected fork shaft 51, 52 or 53 is slid in the axial direction by sliding the shift select shaft 20 in response to a shift operation performed on the shift lever L. Then, the synchromesh mechanisms 11, 12 or 13, which corresponds to the selected fork shaft 51, 52, or 53, is operated via the shift forks 31, 32 or 33 that is fitted to the selected fork shaft 51, 52, or 53.

As shown in FIG 3, a shift inner lever 21 that is used to select one of the fork shafts 51, 52 and 53 includes a cylindrical portion (base portion) 21a that is fixed to the outer periphery of the shift select shaft 20, and an arm portion 21b the extends from the cylindrical portion 21a in the radial direction of the cylindrical portion 21a. A fitting pin P passes through the shift select shaft 20 and the cylindrical portion 21a, whereby the shift inner lever 21 is connected to the shift select shaft 20 in such a manner that the shift inner lever 21 rotates and slides together with the shift select shaft 20.

An interlock plate (interlock member) 26 is fitted on the outer periphery of the cylindrical portion 21a of the shift inner lever 21 in such a manner that the interlock plate 26 is movable relative to the cylindrical portion 21a in the axial direction but the interlock plate 26 is not able to rotate about the axis relative to the cylindrical portion 21a. An engagement piece groove 26c is formed in the interlock plate 26, and extends in the axial direction. The engagement piece groove 26c is defined by paired guide faces that face each other and that slidably contact the side faces of the arm portion 21b of the shift inner lever 21 in the direction in which the arm portion 21b pivots. The distance between the guide faces of the engagement piece passage 26c is set in such a manner that two or three pairs from among a pair of heads 22a and 22a, a pair of heads 23a and 23a and a pair of heads 24a and 24a that are engaged with the arm portion 21b of the shift inner lever 21 and that are moved in the axial direction are not able to pass between the guide faces at the same time, that is, in such a manner that only one pair from among the pair of heads 22a and 22a, the pair of heads 23a and 23a and the pair of heads 24a and 24a is able to pass between the guide faces. As described above, the interlock plate 26 is movable relative to the cylindrical portion 21a of the shift inner lever 21 in the axial direction but immovable relative to the transmission case in the axial direction.

When a select operation is performed on the shift lever L to move the shift lever L in the select direction indicated by the arrow X in FIG 2, the operation force applied to the shift lever L is transferred to the shift select shaft 20 via the select inner lever 27 by the select cable, whereby the shift select shaft 20 is rotated to a rotational position corresponding to the position to which the shift lever L is operated. FIG 3 shows the positions of the shift select shaft 20 and the shift inner lever 21 when the shift lever L is operated to the third gear-fourth gear select position P2.

When a shift operation is performed on the shift lever L to move the shift lever L in the shift direction indicated by the arrow Y in FIG 2, the operation force applied to the shift lever L is transferred to the shift select shaft 20 by the shift cable, and the shift select shaft 20 slides in the axial direction (direction perpendicular to the sheet on which FIG 3 is drawn) to a slide position corresponding to the position to which the shift lever L is operated.

The forward gear engagement portions 22, 23 and 24 include the pair of heads (forward gear engagement pieces) 22a and 22a, the pair of heads 23a and 23a and the pair of heads 24a and 24a, respectively. The heads 22a and 22a are arranged on the respective sides of a path, along which the arm portion 21b of the shift inner lever 21 pivots, in the axial direction. Similarly, the heads 23a and 23a are arranged on the respective sides of the path, along which the arm portion 21b of the shift inner lever 21 pivots, in the axial direction, and the heads 24a and 24a are arranged on the respective sides of the path, along which the arm portion 21b of the shift inner lever 21 pivots, in the axial direction. The forward gear engagement portions 22, 23 and 24 are provided on the fork shafts 51, 52 and 53 that are provided for the synchromesh mechanisms 11, 12 and 13, respectively (FIG 3 shows the first gear-second gear fork shaft 51, the third gear-fourth gear fork shaft 52 and the fifth gear-sixth gear fork shaft 53, and FIG 4 shows only the fifth gear-sixth gear fork shaft 53). A fitting pin P passes through the fork shaft 51 and the first gear-second gear engagement portion 22, a fitting pin P passes through the fork shaft 52 and the third gear-fourth gear engagement portion 23, and a fitting pin P passes through the fork shaft 53 and the fifth gear-sixth gear engagement portion 24. Thus, the forward gear engagement portions 22, 23 and 24 are connected to the fork shafts 51, 52 and 53 in such a manner that the forward gear engagement portions 22, 23 and 24 slide together with the fork shafts 51, 52 and 53, respectively.

The pair of heads 22a and 22a, the pair of heads 23a and 23a and the pair of heads 24a and 24a are arranged at such positions that the arm portion 21 of the shift inner lever 21 is able to be engaged with one of the pair of heads 22a and 22a, the pair of heads 23a and 23a and the pair of heads 24a and 24a, which is selected in response to a select operation. The selected pair of heads 22a and 22a, 23a and 23a or 24a and 24a is moved by the arm portion 21b in the axial direction of the shift select shaft 20. Movements of the pair of heads 22a and 22a, the pair of heads 23a and 23a, and the pair of head 24a and 24a from the neutral positions in the axial direction, that is, movements of the forward gear engagement portions 22, 23 and 24 that include the pair of heads 22a and 22a, the pair of heads 23a and 23a, and the pair of heads 24a and 24a from the neutral positions in the axial direction are linked to the operations of the synchromesh mechanisms 11, 12 and 13 and execution of the shift operations to select forward gear, respectively.

Further, as shown in FIG. 5, a reverse lever 25 is provided on the shift select shaft 20 in such a manner that the reverse lever 25 rotates together with the shift select shaft 20 and the reverse lever 25 slides together with the shift select shaft 20. A reverse arm (reverse gear shift member) 28 that includes a reverse head 28a is arranged near the path along which the reverse lever 25 pivots in accordance with the rotation of the shift select shaft 20. The reverse arm 28 is engaged with the reverse idler gear 10c at the end portion that is opposite to the end portion at which the reverse head 28a is formed. Therefore, when a select operation is performed on the shift lever L and the shift lever L is moved to the reverse select position P4 in FIG. 2, the reverse lever 25 pivots to a position that faces the reverse head 28a (refer to a two-dot chain line in FIG. 5). If the shift lever L is moved from this position to the reverse position REV, for example, the reverse lever 25 is moved toward the rear as viewed in FIG. 5 in the direction perpendicular to the sheet on which FIG 5 is drawn. Then, the reverse lever 25 contacts the reverse head 28a to move the reverse arm 28 in the direction along the axis of the shift select shaft 20. Thus, the reverse idler gear 10c moves in the axial direction of the reverse shaft 3, and meshes with the reverse drive gear 10a and the reverse driven gear 10b.

When the shift lever L is at the neutral position (in the embodiment of the invention, the third gear-fourth gear select position P2) and therefore any gear has not been selected yet, the arm portion 21b of the shift inner lever 21 is also at the neutral position in the axial direction and the pivot direction. Therefore, the heads 22a and 22a, the heads 23a and 23a, and the heads 24a and 24a are arranged on the respective sides of the path along which the arm portion 21b pivots. At this time, one of the heads 22a and 22a, one of the heads 23a and 23a, and one of the heads 24a and 24a are arranged adjacent to each other. Similarly, the other head 22a, the other head 23a and the other head 24a are arranged adjacent to each other.

Then, in response to a select operation performed on the shift lever L, the arm portion 21n of the shift inner lever 21 pivots in accordance with the shift select shaft 20, and is placed at a position at which the arm portion 21b is able to be engaged with one of the pair of heads 22a and 22a, the pair of heads 23a and 23a, and the pair of heads 24a and 24a, which is arranged at the pivot position corresponding to the select position of the shift lever L. For example, when the shift lever L is operated to the first gear-second gear select position P1, the arm portion 21b of the shift inner lever 21 is placed at a position at which the arm portion 21b is able to be engaged with the pair of heads 22a and 22a of the forward gear engagement portion 22 provided on the first gear-second gear fork shaft 51. When the shift lever L is operated to the third gear-fourth gear select position P2, the arm portion 21b of the shift inner lever 21 is placed at a position at which the arm portion 21b is able to be engaged with the pair of heads 23a and 23a of the forward gear engagement portion 23 that is provided on the third gear-fourth gear fork shaft 52. When the shift lever L is operated to the fifth gear-sixth gear select position P3, the arm portion 21b of the shift inner lever 21 is placed at a position at which the arm portion 21b is able to be engaged with the pair of heads 24a and 24a of the forward gear engagement portion 24 that is provided on the fifth gear-sixth gear fork shaft 53. When the shift lever L is operated to the reverse select position P4, the shift select shaft 20 rotates in the counterclockwise direction shown in FIG 5, whereby the reverse lever 25 is placed at a position at which the reverse lever 25 is able to be engaged with the reverse head 28a of the reverse arm 28.

When the arm portion 21 of the shift inner lever 21 is positioned in such a manner that the arm portion 21b is able to be engaged with one of the pair of heads 22a and 22a, the pair of heads 23a and 23a and the pair of heads 24a and 24a of the forward gear engagement portions in the above-described manner, one of the fork shafts 51, 52 and 53 is selected so that an operation force is transferred. Alternatively, the reverse lever 25 is positioned in such a manner that the reverse lever 25 is able to be engaged with the reverse head 28a of the reverse arm 28.

In this state, when the shift lever L is operated in the shift direction, an operation force applied to the shift lever L is transferred to the shift select shaft 20 via the shift cable. Thus, the shift select shaft 20 slides in its axial direction. When the arm portion 21b of the shift inner lever 21 is engaged with one of the pair of heads 22a and 22a, the pair of heads 23a and 23a, and the pair of heads 24a and 24a of the forward gear engagement portions, the forward gear engagement portion that includes the pair of heads to which the arm portion 21b is engaged and the fork shaft that is linked with this forward gear engagement portion are slid together with the pair of heads to which the arm portion 21b is engaged. As a result, one of the synchromesh mechanisms 11, 12 and 13 is operated.

When the reverse lever 25 is engaged with the reverse head 28a, the reverse arm 28 is slid in the axial direction together with the reverse head 28a, whereby the reverse arm 28 moves the reverse idler gear 10c in the axial direction of the reverse shaft 3.

FIG. 3 shows the state in which the arm portion 21b of the shift inner lever 21 is positioned in such a manner that the arm portion 21b is able to be engaged with the pair of heads 23a and 23a of the forward gear engagement portion 23 provided on the third gear-fourth gear fork shaft 52. In this state, if the shift lever L is operated to the third gear position 3rd, the shift select shaft 20 moves toward the rear as viewed in FIG 3 in the direction perpendicular to the sheet on which FIG 3 is drawn. In accordance with this movement of the shift select shaft 20, the arm portion 21b, the forward gear engagement portion 23, the third gear-fourth gear fork shaft 52 and the third gear-fourth gear shift fork 32 move toward the rear as viewed in FIG 3 in the direction perpendicular to the sheet on which FIG. 3 is drawn, whereby the second synchromesh mechanism 12 is moved to the third drive gear 6a and the rotation of the second synchromesh mechanism 12 is synchronized with the rotation of the third drive gear 6a. As a result, third gear is selected. In the state shown in FIG 3, if the shift lever L is operated to the fourth gear position 4th, the shift select shaft 20 moves toward the front as viewed in FIG 3 in the direction perpendicular to the sheet on which FIG 3 is drawn. In accordance with this movement of the shift select shaft 20, the arm portion 21b, the forward gear engagement portion 23, the third gear-fourth gear fork shaft 52 and the third gear-fourth gear shift fork 32 move toward the front as viewed in FIG 3 in the direction perpendicular to the sheet on which FIG 3 is drawn, whereby the second synchromesh mechanism 12 is moved to the fourth drive gear 7a and the rotation of the second synchromesh mechanism 12 is synchronized with the rotation of the fourth drive gear 7a. As a result, fourth gear is selected.

FIG. 4 is a cross-sectional view showing a portion at which the fifth gear-sixth gear fork shaft 53 is engaged with the third synchromesh mechanism 13. As shown in FIG 4, the shift fork 33 is fitted to the fork shaft 53 via a connection portion 30a indicated by a two-dot chain line. The tip portion of the shift fork 33 is engaged with the sleeve 13a of the third synchromesh mechanism 13.

Three lock ball grooves 41, 42 and 43 that correspond to fifth gear, neutral position and sixth gear, respectively, are formed in the fork shaft 53, and one lock ball 44 that is pressed to the fork shaft 53 is fitted in selected one of the lock ball groove 41, 42 and 43. The lock ball 44 is housed in a hole C1 that is formed in a transmission case C. The lock ball 44 is pressed to the fork shaft 53 by a compressed coil spring 46 which is latched by a plug 45 that is also housed in the hole C1. With this structure, it is possible to suppress slip-out of gear and obtain a crisp shift feel.

The lock ball 44 is pressed to the lock ball groove 42 unless the lock ball 44 is completely moved out of the lock ball groove 42. Therefore, when the fork shafts 51, 52 and 53 provided with the forward gear engagement portions 22, 23 and 24 are moved slightly from the neutral positions in the axial direction, a neutral position returning force for returning the fork shafts 51, 52 and 53 to the neutral positions are applied to the fork shafts 51, 52 and 53 and the forward gear engagement portions 22, 23 and 24 (heads 22a and 22a, heads 23a and 23a, and heads 24a and 24a) that are fixed to the fork shafts 51, 52 and 53, respectively.

As shown in FIG.4, in the third synchromesh mechanism 13, multiple synchronizer keys 18 are arranged at regular intervals in the circumferential direction on the outer side of a synchronizer hub 17 in the radial direction of the synchronizer hub 17. A projection 18a, which projects outward in the radial direction of the synchronizer hub 17, is formed at the center portion of each synchronizer key 18. The projections 18a are fitted in a groove 13b that is formed in the inner peripheral face of the sleeve 13a and that extends in the circumferential direction of the sleeve 13a. The synchronizer keys 18 are pressed to the inner peripheral face of the sleeve 13a by a key spring 19 provided in the synchronizer hub 17. With this structure as well as with the mechanism that includes the lock ball 44, etc., if the heads 24a and 24a and the fork shaft 53 are moved slightly from the neutral positions in the axial direction, a neutral position returning force is applied to the sleeve 13a, because the synchronizer keys 18 are pressed to the inner peripheral face of the sleeve 13a unless the projections 18a of the synchronizer keys 18 are completely moved out of the groove 13b that is formed in the inner peripheral face of the sleeve 13a.

The same structure is applied to a portion at which the first gear-second gear fork shaft 51 is engaged with the first synchromesh mechanism 11, and a portion at which the third gear-fourth gear fork shaft 52 is engaged with the second synchromesh mechanism 12.

Next, the features of the gear noise prevention system for a manual transmission according to the embodiment of the invention will be described. The gear noise prevention system is used to prevent occurrence of reverse shift gear noise. When a reverse shift operation is performed, the gear noise prevention system connects the input shaft 1 to the output shaft 2 after the synchromesh mechanism is operated (for example, the third synchromesh mechanism 13 is operated so as to select sixth gear) to sufficiently slow down or stop the rotation of the input shaft 1. In the embodiment of the invention, the gear noise prevention system prevents gear noise by operating the third synchromesh mechanism 13. However, synchromesh mechanisms other than the third synchromesh mechanism 13 may be used to prevent gear noise.

As shown in FIG 5, the gear noise prevention system includes a first head (first head member) 61 that is provided on the shift select shaft 20, a second head (intermediate head member) 62 that is provided on the third gear-fourth gear fork shaft 52, and a third head (pre-balk head member) 63 that is provided on the fifth gear-sixth gear fork shaft 53. These heads 61, 62 and 63 are arranged at positions that are offset from a position at which the select-shift mechanism that includes the shift inner lever 21 and the forward gear engagement portions 22, 23 and 24 is arranged (position at a predetermined distance from the position, at which the select-shift mechanism is arranged, in the axial direction of the shift select shaft 20).

The first head 61 is fitted integrally to the shift select shaft 20. That is, the first head 61 rotates in accordance with the rotation of the shift select shaft 20, and moves in the axial direction in accordance with the sliding motion of the shift select shaft 20 in the axial direction. In other words, the first head 61 rotates in the same direction as the rotational direction of the shift select shaft 20 in accordance with the rotation of the shift select shaft 20, which is caused in response to a select operation performed on the shift lever L (operation performed in the direction indicated by the arrow X in FIG.2). Further, the first head 61 moves in the same direction as the axial direction of the shift select shaft 20 in accordance with a sliding motion of the shift select shaft 20 in the axial direction, which is caused in response to a shift operation performed on the shift lever L (operation performed in the direction indicated by the arrow Y in FIG 2).

In the embodiment of the invention, when a select operation is performed on the shift lever L, which has been at the third gear-fourth gear select position P2, to move the shift lever L toward the fifth gear-sixth gear select position P3, the shift select shaft 20 and the first head 61 rotate in the clockwise direction shown in FIG 5. On the other hand, when a select operation is performed on the shift lever L, which has been at the third gear-fourth gear select position P2, to move the shift lever L toward the reverse select position P4, the shift select shaft 20 and the first head 61 rotate in the counterclockwise direction shown in FIG 5.

The first head 61 includes a cylindrical sleeve portion 61a that surrounds the outer periphery of the shift select shaft 20, and a pressure applying lug portion 61b that extends from a portion of the outer peripheral face of the sleeve portion 61a outward in the radial direction. The pressure applying lug portion 61b is formed in a substantially traperoidal shape that is tapered outward in the radial direction when the pressure applying lug portion 61b is taken along a plane perpendicular to the axis of the shift select shaft 20, as shown in FIG 5. Among the positions of the pressure applying lug portion 61b shown in FIG 5, the position indicated by a solid line shows the position when the shift lever L is at the third gear-fourth gear select position P2, and the position indicated by a two-dot chain line shows the position when the shift lever L is at the reverse select position P4. That is, when a select operation is performed on the shift lever L to move the shift lever L from the third gear-fourth gear select position P2 to the reverse select position P4, the pressure applying lug portion 61b pivots from the position indicated by the solid line in FIG 5 to the position indicated by the two-dot chain line in FIG 5 in accordance with the select operation. The function of the pressure applying lug portion 61b will be described later in detail.

In addition, a coil spring 64 is wound around the shift select shaft 20. The operation force applied to the shift select shaft 20 in the rotational direction is restricted by a biasing force of the coil spring 64 in the circumferential direction.

The second head 62 is arranged in such a manner that the second head 62 is rotatable relative to the third gear-fourth gear fork shaft 52 and movable in the axial direction relative to the third gear-fourth gear fork shaft 52. That is, the second head 62 is able to rotate independently of the third gear-fourth gear fork shaft 52 and is able to move in the axial direction independently of the third gear-fourth gear fork shaft 52.

The second head 62 includes a cylindrical sleeve portion 62a that surrounds the outer periphery of the third gear-fourth gear fork shaft 52, a pressure-receiving lug portion 62b that extends from a portion of the outer peripheral face of the sleeve portion 62a outward in the radial direction, and a pre-balk pressure applying lug portion 62c that extends from another portion of the outer peripheral face of the sleeve portion 62a outward in the radial direction.

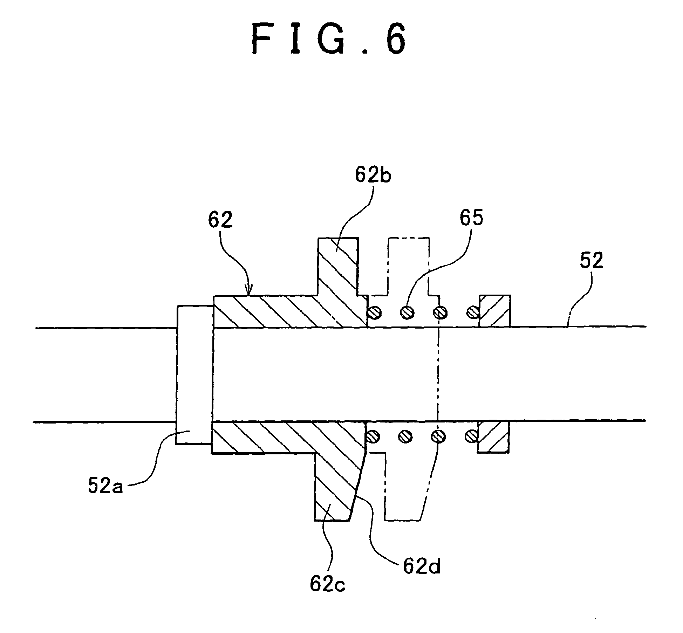

As shown in FIG 6 (side view of the third gear-fourth gear fork shaft 52 at a portion near the position at which the second head 62 is arranged), the third gear-fourth gear fork shaft 52 is provided with a stopper 52a that restricts the position of the second head 62 on the third gear-fourth gear fork shaft 52. The stopper 52a restricts movement of the second head 62 in the leftward direction shown in FIG 6 (toward the rear as viewed in FIG 5 in the direction perpendicular to the sheet on which FIG 5 is drawn). Therefore, when the second head 62 contacts the stopper 52a (hereinafter, the position of the second head 62 at which the second head 62 contacts the stopper 52a will be referred to as "initial position of the second head 62 in the axial direction"), the movement of the second head 62 in the leftward direction shown in FIG 6 is prohibited whereas the movement of the second head 62 in the rightward direction shown in FIG 6 (toward the front as viewed in FIG 5 in the direction perpendicular to the sheet on which FIG 5 is drawn) is permitted.

When the second head 62 is at the position at which the second head 62 contacts the stopper 52a, the pressure-receiving lug portion 62b is arranged at a position at which the pressure-receiving lug portion 62b receives a pressing force from the pressure applying lug portion 61b included in the first head 61 when the first head 61 rotates (in the counterclockwise direction shown in FIG 5). That is, the pressure applying lug portion 61b of the first head 61 and the pressure-receiving lug portion 62b of the second head 62 are arranged in such a manner that the pressure applying lug portion 61b and the pressure-receiving lug portion 62b face each other on a virtual plane that extends perpendicularly to the axes of the shift select shaft 20 and the third gear-fourth gear fork shaft 52.

The pre-balk pressure applying portion 62c of the second head 62 is formed at the position that is apart from the position at which the pressure-receiving lug portion 62b is formed by 180 degrees in the circumferential direction of the second head 62. That is, the pre-balk pressure applying lug portion 62c is formed at the position opposite to the position at which the pressure-receiving lug portion 62b is formed. A tapered face 62d is formed on the face of the pre-balk pressure applying lug portion 62c. The tapered face 62d extends toward the downstream side in the direction in which the pre-balk pressure applying lug portion 62c pivots using a force from the pressure applying lug portion 61b of the first head 51 (clockwise direction shown in FIG 5). The tapered face 62d is sloped toward the rear as viewed in FIG 5 in the direction perpendicular to the sheet on which FIG 5 is drawn.

A coil spring (biasing means) 65 that applies a biasing force to the second head 62 is wound around the third gear-fourth gear fork shaft 52. The coil spring 65 supplies the second head 62 with a biasing force that is directed in the direction opposite to the direction of the pressing force which is received from the pressure applying lug portion 61b of the first head 61 and which is used to rotate the second head 62. That is, when a pressing force from the pressure applying lug portion 61b of the first head 61 is not applied to the second head 62 or application of the pressing force is terminated, the second head 62 is returned to the initial position (position shown in FIG. 5: hereinafter, this position will be referred to as the initial position of the second head 62 in the rotational direction) by the biasing force of the coil spring 65.

In addition, the coil spring 65 supplies the second head 62 with a biasing force in the axial direction. More specifically, a biasing force is applied to the second head 62 in such a direction that the second head 62 contacts the stopper 52a (direction in which the second head 62 moves toward the initial position in the axial direction). When an external force in the axial direction other than a biasing force from the coil spring 65 is not applied to the second head 62, the state in which the second head 62 contacts the stopper 52a is maintained (refer to a solid line in FIG 6). When an external force that proceeds in the rightward direction shown in FIG 6 (toward the front as viewed in FIG 5 in the direction perpendicular to the sheet on which FIG 5 is drawn) is applied to the second head 62, the second head 62 moves in the rightward direction shown in FIG 6 (toward the front as viewed in FIG 5 in the direction perpendicular to the sheet on which FIG 5 is drawn) against a biasing force of the coil spring 65.

The third head 63 is fitted integrally to the fifth gear-sixth gear fork shaft 53. That is, the third head 63 moves in the axial direction in accordance with a sliding motion of the fifth gear-sixth gear fork shaft 53 in the axial direction. In other words, the third head 63 moves along the axial direction in accordance with the sliding motion of the fifth gear-sixth gear fork shaft in the axial direction, which is caused in response to a shift operation performed to select fifth gear and sixth gear.

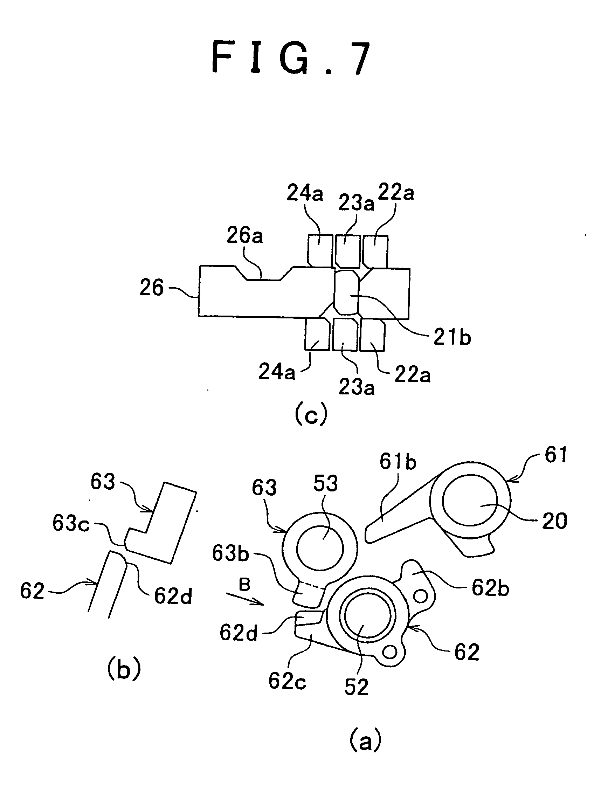

The third head 63 includes a cylindrical sleeve portion 63a that surrounds the outer periphery of the fifth gear-sixth gear fork shaft 53, and a pre-balk pressure-receiving lug portion 63b that extends from a portion of the outer peripheral face of the sleeve portion 63a outward in the radial direction. The pre-balk pressure-receiving lug portion 63b is formed so as to face the pre-balk pressure applying lug portion 62c that is formed in the second head 62. That is, the pre-balk pressure-receiving lug portion 63b is formed at a position at which the pre-balk pressure-receiving lug portion 63b slidably contacts the tapered face 62d that is formed on the pre-balk pressure applying lug portion 62c of the second head 62 when the second head 62 rotates using a pressing force from the pressure applying lug portion 61b of the first head 61. In addition, a pressure-receiving face 63c is formed in the pre-balk pressure-receiving lug portion 63b. The pressure-receiving face 63c is a sloped face that faces the tapered face 62d formed in the pre-balk pressure applying lug portion 62c (see FIG 7B). Therefore, in the state in which the second head 62 rotates and the tapered face 62d formed in the pre-balk pressure applying lug portion 62c applies a pressing force to the pressure-receiving face 63c formed in the pre-balk pressure receiving lug portion 63b of the third head 63, a component force of the pressing force from the second head 62 is applied in the direction along the axis of the third head 63, and the third head 63 slides in the axial direction together with the fifth gear-sixth gear fork shaft 53 (slides toward the front as viewed in FIG. 5 in the direction perpendicular to the sheet on which FIG 5 is drawn).

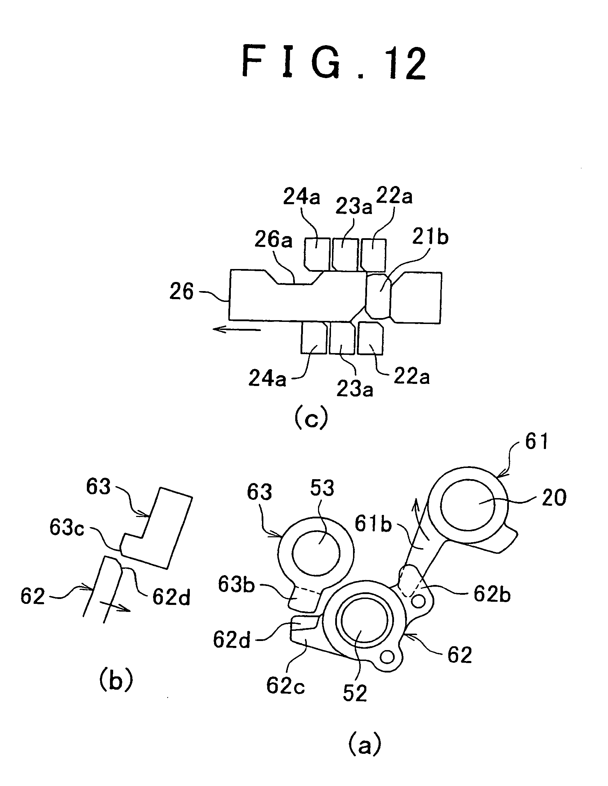

Next, the operation of the gear noise prevention system structured in the above-described manner will be described with reference to FIGs. 7 to 12. First, a reverse shift operation (shift operation performed on the shift lever L to move the shift lever L from the third gear-fourth gear select position P2 to the reverse position REV) will be described with reference to FIGs. 7 to 11. Then, an operation for shifting output reverse gear (operation performed on the shift lever L to move the shift lever L from the reverse position REV to the third gear-fourth gear select position P2) will be described with reference to FIG. 12.

FIGs. 7A to 12A are views showing the gear noise prevention system taken along a plane perpendicular to the axis of the shift select shaft 20. FIGs. 7B to 12B are views showing the positional relationship between the second head 62 and the third head 63 viewed in the direction of an arrow B. FIGs. 7C to 12C are views showing the positional relationship between the arm portion 21b of the shift inner lever 21, and each of the pair of heads 22a and 22a, the pair of heads 23a and 23a, and the pair of heads 24a and 24a. FIGS. 7C to 12C are development view showing the cross-section of the interlock plate 26 along the path along which the arm 21b pivots. The interlock plate 26 has a recess 26a that permits the pair of heads 24a and 24a for fifth gear and sixth gear to move during a pre-balk operation (during an operation of the third synchromesh mechanism 13).

FIGs. 7A to 7C show the state before a reverse shift operation is performed. FIG 7 shows, for example, the state which is achieved immediately after the vehicle, which has been moving forward, is stopped and in which the shift lever L is operated to the third gear-fourth gear select position P2 in order to perform a reverse shift operation. In this state, as shown in FIGs. 7A and 7B, the heads 61, 62 and 63 are at the initial positions, and therefore these heads 61, 62 and 63 face with each other with predetermined distances left therebetween. Therefore, these heads 61, 62 and 63 do not contact each other. That is, an operation force is not transferred among the heads 61, 62 and 63. As shown in FIG 7C, the arm portion 21b of the shift inner lever 21 is at a position at which the arm portion 21b is able to be engaged with the pair of heads 23a and 23a of the forward gear engagement portion 23 that is provided on the third gear-fourth gear fork shaft 52.

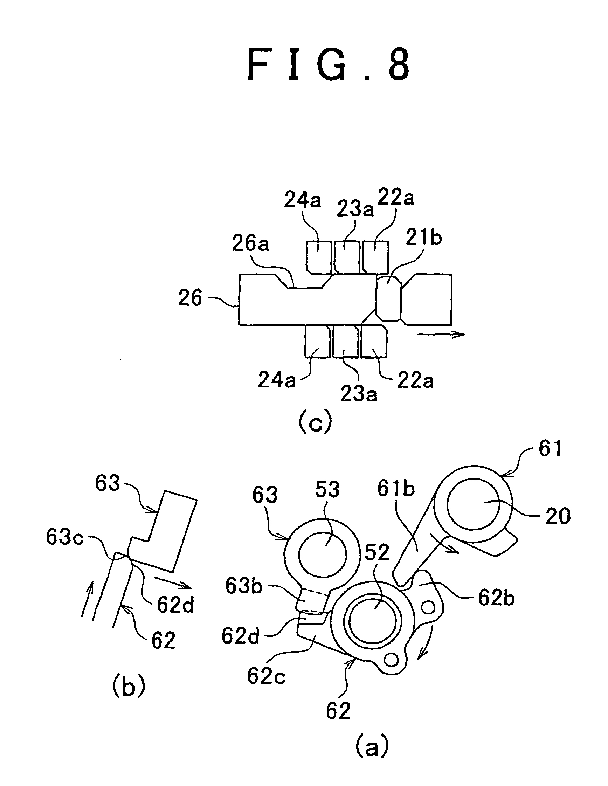

In this state, if a select operation to move the shift lever L toward the reverse select position P4 is started, as shown in FIG 8A, the first head 61 rotates (see an arrow in FIG 8A) in accordance with the rotation of the shift select shaft 20, the pressure applying lug portion 61b of the first head 61 contacts the pressure-receiving lug portion 62b of the second head 62, and a rotational force of the first head 61 is transferred via the pressure applying lug portion 61b and the pressure-receiving lug portion 62b to the second head 62 and used to rotate the second head 62. As the amount by which the shift lever L is moved toward the reverse select position P4 increases, the amount by which the second head 62 rotates also increases. FIGs. 8A, 9A and 10A sequentially show the state in which the amount by which the second head 62 rotates increases.

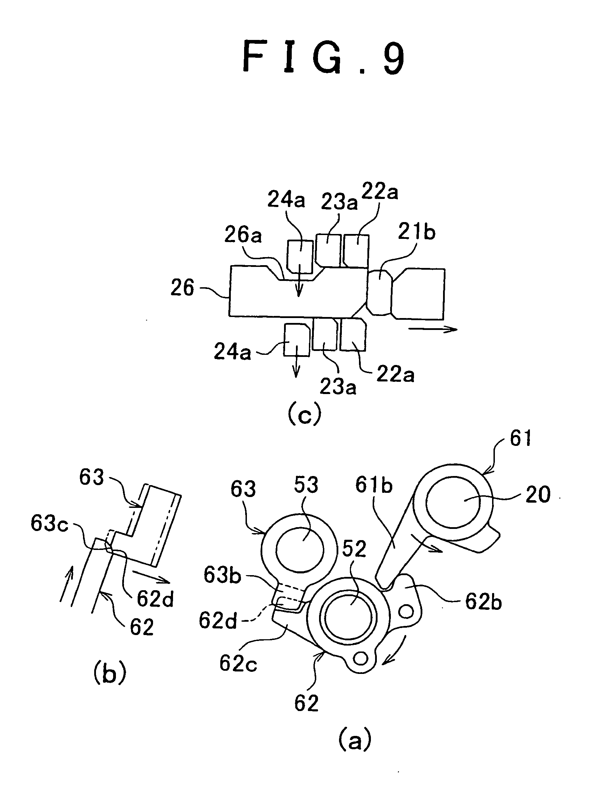

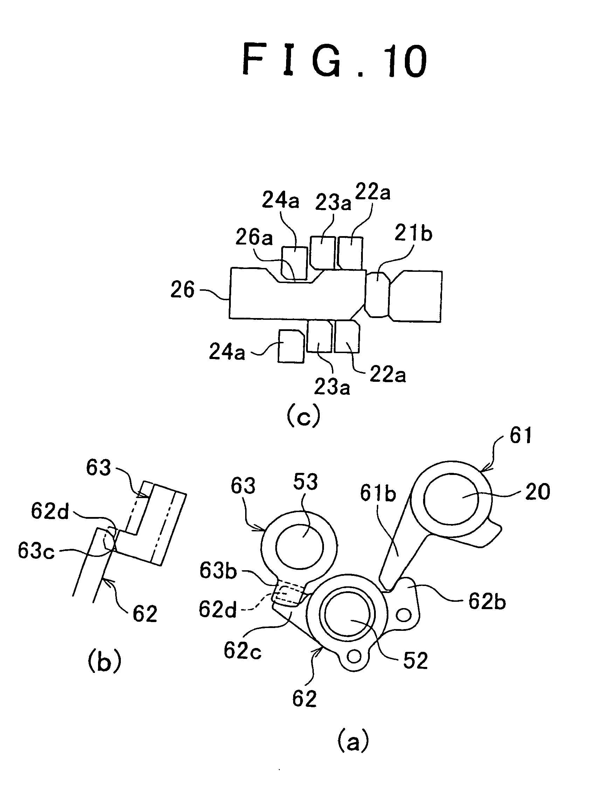

As the amount by which the second head 62 rotates increases, the tapered face 62d of the pre-balk pressure applying lug portion 62c formed in the second head 62 contacts the pressure-receiving face 63c of the pre-balk pressure-receiving lug portion 63b formed in the third head 63 (see FIG 8B), and presses the pressure-receiving face 63c. FIGs. 8B, 9B and 10B sequentially show the state in which the pressing force applied to the pressure-receiving face 63c increases. The third head 63 that receives the pressing force moves in the direction along the axis of the fifth gear-sixth gear fork shaft 53 (toward the front as viewed in FIG 5 in the direction perpendicular to the sheet on which FIG 5 is drawn), as the amount by which the second head 62 rotates increases. Thus, the fifth gear-sixth gear fork shaft 53 and the fifth gear-sixth gear shift fork 33 moves together with the third head 63, and an operation of the third synchromesh mechanism 13 is started. More specifically, the sixth drive gear 9a is connected (frictionally contacts) the input shaft 1 via the third synchromesh mechanism 13. That is, the input shaft 1 is connected to the output shaft 2 via the third synchromesh mechanism 13, the sixth drive gear 9a, and the sixth driven gear 9b. At this time, as shown in FIGs. 9C and 10C, the head 24a is fitted in the recess 26a formed in the interlock plate 26. Thus, the fifth gear-sixth gear fork shaft 53 and the fifth gear-sixth gear shift fork 33 are permitted to move.

During a shift operation to select reverse gear, the vehicle is not moving and the output shaft 2 is also not moving. Therefore, even when the input shaft 1 is rotating under its inertia, the input shaft 1 that is connected to the output shaft 2 is forcibly stopped or slowed down (the rotation of the input shaft 1 is synchronized with the rotation of the output shaft 2) due to the operation of the third synchromesh mechanism 13 described above. Therefore, if a shift operation is performed to move the shift lever L to the reverse position REV, it is possible to mesh the reverse idler gear 10c with the reverse drive gear 10a in the state where the reverse drive gear 10a that is provided on the input shaft 1 in such a manner that the reverse drive gear 10a rotates together with the input shaft 1 is not moving or is slowed down. As a result, these gears are meshed with each other smoothly, which makes it possible to prevent occurrence of gear noise.

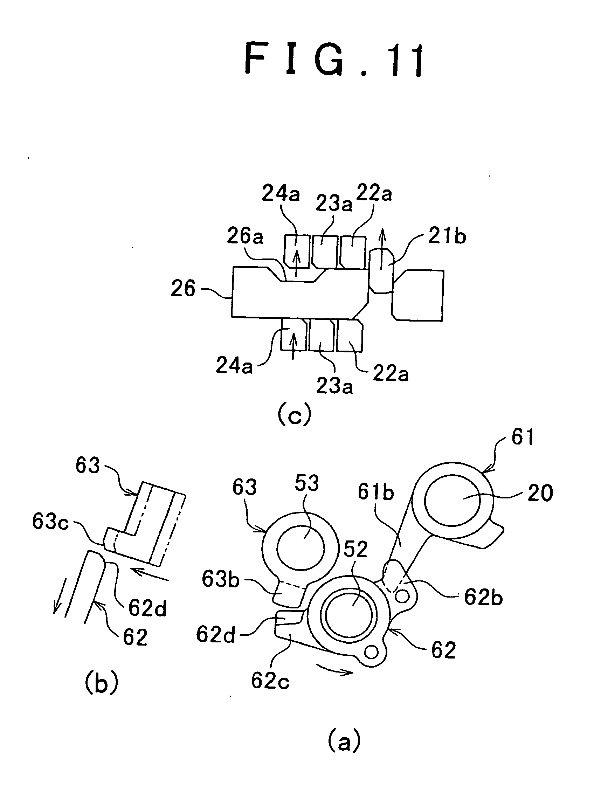

When the shift lever L is operated to the reverse position REV, the shift select shaft 20 slides in the axial direction. More specifically, the shift select shaft 20 slides toward the rear as viewed in FIGs. 5 and 10 in the direction perpendicular to the sheets on which FIG 5 and FIG 10 are drawn. In accordance with this sliding motion of the shift select shaft 20, the first head 61 moves in the same direction, and the pressure applying lug portion 61 that is formed in the first head 61 is retracted from the pressure-receiving lug portion 62b formed in the second head 62 in the axial direction. That is, the pressing force that has been applied from the pressure applying lug portion 61b of the first head 61 is no longer applied to the second head 62. As shown in FIG 11, the second head 62 is returned to the initial position (position shown in FIG 5) in the rotational direction by a biasing force of the coil spring 65 (see FIG 5). Because the second head 62 is returned to the initial position in the rotational direction, the biasing force that has been applied to the third head 63 in the axial direction is no longer applied. The third head 63 is also returned to the initial position, and therefore the input shaft 1 and the output shaft 2, which have been connected to each other due to an operation of the third synchromesh mechanism 13, are disconnected from each other. That is, the third synchromesh mechanism 13 is placed in the neutral state, and then a shift operation for moving the shift lever L toward the reverse position REV proceeds. In this way, shifting to reverse gear is completed.

Next, an operation for shifting out of reverse gear (operation for moving the shift lever L from the reverse position REV to the third gear-fourth gear select position P) will be described. When the shift lever L, which has been at the reverse position REV, is moved toward the reverse select position P4, the shift select shaft 20 moves in the axial direction. More specifically, the shift select shaft 20 slides toward the front as viewed in FIGs. 5 and 12 in the direction perpendicular to the sheets on which FIG 5 and FIG 12 are drawn. In accordance with this sliding motion of the shift select shaft 20, the first head 61 moves toward the initial position in the axial direction. Because the second head 62 has been returned to the initial position in the rotational direction as described above, the first head 61 contacts the second head 62 in the axial direction, and the first head 61 moves the second head 62 in the axial direction (toward the front as viewed in FIGs. 5 and 12 in the direction perpendicular to the sheets on which FIG 5 and FIG 12 are drawn) against a biasing force of the coil spring 65 which is applied in the axial direction. More specifically, the pressure applying lug portion 61b of the first head 61 presses the pressure-receiving lug portion 62b of the second head 62 in the axial direction, thereby moving the second head 62 in the axial direction. That is, in this case, the first head 61 applies a pressing force to the second head 62. However, because the pressing force is applied in the axial direction, the second head 62 does not rotate toward the third head 63. Accordingly, the third synchromesh mechanism 13 does not operate and maintained in the neutral state.

When the shift lever L is operated toward the third gear-fourth gear select position P2 after being operated to the reverse select position P4 (actually, the shift lever L is returned to the third gear-fourth gear select position P2 by a spring that is connected to the shift lever L and that provides the shift lever L with a biasing force to move the shift lever L toward the third gear-fourth gear select position P2), the shift select shaft 20 rotates (see an arrow in FIG 12A). In accordance with this rotation of the shift select shaft 20, the first head 61 also rotates toward the initial position. When the shift lever L reaches the third gear-fourth gear select position P2, the shift select shaft 20 and the first head 61 are returned to the initial positions shown in FIGs. 5 and 7. Also, the biasing force that has been applied from the first head 61 in the axial direction is no longer applied to the second head 62. Therefore, the second head 62 is returned to the initial position in the axial direction (position at which the second head 62 contacts the stopper 52a) by a biasing force of the coil spring 65 in the axial direction.

As described so far, in the embodiment of the invention, the rotational force of the shift select shaft 20 is transferred from the first head 61 to the third head 63 via the second head 62. When the drive power is transferred from the second head 62 to the third head 63, the rotational force is converted into a traveling force in the axial direction and used to operate the third synchromesh mechanism 13. Therefore, a reaction force from the fifth gear-sixth gear fork shaft 53 that is caused when the gear noise prevention system is operated is applied to the second head 62 in the axial direction. However, the shift select shaft 20 applies a biasing force to the second head 62 in the rotational direction. Therefore, the reaction force is not directly applied to the shift select shaft 20. That is, the reaction force from the fifth gear-sixth gear fork shaft 53 is applied in the direction along the axis of the second head 62, is applied to the stopper 52a via the second head 62, and acts as a force that moves the third gear-fourth gear fork shaft 52 in the axial direction. However, the movement of the third gear-fourth gear fork shaft 52 in the axial direction is restricted because the head 23a of the forward gear engagement portion 23 contacts the interlock plate 26. As a result, the movement of the second head 62 in the axial direction is restricted. Thus, the reaction force is received at a sufficient level. Therefore, it is possible to move the fifth gear-sixth gear fork shaft 53 by a large amount in order to operate the third synchromesh mechanism 13. Therefore, it is possible to enhance the reliability of the gear noise prevention function. Because the gear noise prevention function is executed when a select operation is performed on the shift lever L, the gear noise prevention function is executed for a long period of time. Therefore, the inertial rotation of the input shaft 1 is sufficiently slowed down and occurrence of gear noise is reliably prevented.

In the embodiment described above, the invention is applied to a synchromesh manual transmission which is mounted in a FF vehicle and which has six forward gears and one reverse gear. Alternatively, the invention may be applied manual transmissions mounted in other types of vehicles such as FR (front engine rear drive) vehicle. Further, the invention may be applied to transmissions having another number of gears (for example, five forward gears and one reverse gear). Further, the invention may be applied to transmissions that include an actuator which operates in accordance with a shift change operation performed by a driver and which is structured to perform a shift operation using the actuator (so-called AMT: automatic manual transmission).

In the embodiment of the invention, the gear noise prevention system is formed by using the shift select shaft 20, the third gear-fourth gear fork shaft 52 and the fifth gear-sixth gear fork shaft 53. Alternatively, a gear noise prevention mechanism may be formed by using other fork shafts (for example, the first gear-second gear fork shaft 51 and the third gear-fourth gear fork shaft 52). Further, a gear noise prevention mechanism may be formed by using all the fork shafts 51, 52 and 53. That is, the first gear-second gear fork shaft 51 is provided with the heads described above, a rotational force of the shift select shaft 20 is sequentially transferred as a rotational force of the first head 61, a rotational force of the head provided on the first gear-second gear fork shaft 51 and a rotational force of the second head 62. Then, the rotational force of the second head 62 is transferred to the third head 63 as a traveling force in the axial direction. That is, the intermediate head member according to the embodiment of the invention is formed of multiple heads.

In the embodiment of the invention, the second head 62 is supported by the third gear-fourth gear fork shaft 52. However, the function required of the second head 62 is to transfer a rotational force of the shift select shaft 20 to the third head 63. Therefore, as long as the second head 62 is at a position at which the rotational force is able to be transferred to the third head 63, the second head 62 need not be supported by the third gear-fourth gear fork shaft 52.

## Claims

1. A manual transmission that includes a shift select shaft (20) arranged to perform a select operation by rotating about an axis of the shift select shaft (20) and arranged to perform a shift operation by moving in an axial direction of the shift select shaft (20) during a gear-shift operation, a first forward gear fork shaft (53) to which the shift select shaft (20) is connected when the shift select shaft (20) performs the select operation so that a predetermined forward gear select position (P1, P2, P3) is reached, and which is arranged to move in the axial direction in accordance with the shift operation of the shift select shaft (20) and is arranged to perform a gear-shift operation for selecting a predetermined forward gear while operating a synchromesh mechanism (11, 12, 13), a reverse gear shift member (25, 28) to which the shift select shaft (20) is arranged to be connected when the shift select shaft (20) performs the select operation so that a reverse gear select position (P4) is reached, and which is arranged to perform a gear-shift operation for selecting reverse gear in accordance with the shift operation of the shift select shaft (20), and a gear noise prevention system comprising:
a first head member (61) that is arranged to rotate together with the shift select shaft (20) when the shift select shaft (20) performs the select operation for selecting reverse gear;
at least one intermediate head member (62) that is arranged to rotate using a rotational force from the first head member (61) which rotates together with the shift select shaft (20); and
a pre-balk head member (63) that is provided on the first forward gear fork shaft (53), and that is arranged to move the first forward gear fork shaft (53) in the axial direction using a rotational force from the intermediate head member (62), thereby operating the synchromesh mechanism during a period in which the shift select shaft (20) performs the select operation for selecting reverse gear, and wherein the intermediate head member (62) is arranged in such a manner that the intermediate head member (62) is movable in the axial direction of the shift select shaft (20), and when the shift select shaft (20) is returned to a neutral position from a shift position for reverse gear, the intermediate head member (62) is arranged to move in the axial direction by a pressing force that is applied from the first head member (61) to the intermediate head member (62) in the axial direction; **characterised in that**
the intermediate head member (62) is supported by a second forward gear fork shaft (52), and is rotatable relative to the second forward gear fork shaft (52) and is moveable in the axial direction relative to the second forward gear fork shaft (52).

2. The gear noise prevention system according to claim 1, **characterized in that** a pre-balk pressure applying lug portion (62C) that extends outward in a radial direction of the intermediate head member (62) is provided on an outer periphery of the intermediate head member (62) and a pre-balk pressure-receiving lug portion (63b) that extends outward in a radial direction of the pre-balk head member (63) is provided on an outer periphery of the pre-balk head member (63) in order to convert the rotational force of the intermediate head member (62) into a force that moves the first forward gear fork shaft (53) in the axial direction.

3. The gear noise prevention system according to claim 1 or 2, **characterized by** further comprising:
a stopper that is arranged to restrict, when the rotational force is applied from the intermediate head member (62) to the pre-balk head member (63) to move the first forward gear fork shaft (53) in the axial direction, a movement of the intermediate head member (62) in the axial direction that is a direction of application of a reaction force from the pre-balk head member (63) so that the intermediate head member (62) receives the reaction force from the pre-balk head member (63).

4. The gear noise prevention system according any one of claims 1 to 3, **characterized in that** the gear noise prevention system is structured in such a manner that, during the gear-shift operation for selecting reverse gear, when the shift select shaft (20) performs the shift operation so that a reverse gear shift position is reached, the first head member (61) is arranged to move in the axial direction in accordance with the movement of the shift select shaft (20) in the axial direction, the movement of the first head member (61) in the axial direction causes the first head member (61) to retract from the intermediate head member (62) in the axial direction to terminate application of the rotational force to the intermediate head member (62), and application of a biasing force from the intermediate head member (62) to the pre-balk head member (63) to move the forward gear fork shaft (53) in the axial direction is terminated.

5. The gear noise prevention system according to claim 5, **characterized by** further comprising:
biasing means (65) arranged to supply the intermediate head member (62) with a biasing force for moving the intermediate head member (62) toward an initial position in a rotational direction, at which the rotational force from the first head member (61) is not applied to the intermediate head member (62), and a biasing force for moving the intermediate head member (62) toward an initial position in the axial direction, at which the pressing force in the axial direction from the first head member (61) is not applied to the intermediate head member (62).

## Patentansprüche

1. Handschaltgetriebe, das Folgendes enthält: eine Schaltwahlwelle (20), die angeordnet ist, einen Wahlvorgang durch Drehen um eine Achse der Schaltwahlwelle (20) auszuführen, und angeordnet ist, während einer Gangschaltbetätigung einen Schaltvorgang durch Bewegen in eine axiale Richtung der Schaltwahlwelle (20) auszuführen; eine erste Vorwärtsganggabelwelle (53), mit der die Schaltwahlwelle (20) verbunden ist, wenn die Schaltwahlwelle (20) den Wahlvorgang ausführt, so dass eine vorbestimmte Vorwärtsgangwahlposition (P1, P2, P3) erreicht wird, und die angeordnet ist, sich in die axiale Richtung entsprechend des Schaltvorgangs der Schaltwahlwelle (20) zu bewegen, und die angeordnet ist, einen Gangschaltvorgang zum Wählen eines vorbestimmten Vorwärtsgangs auszuführen, während sie einen Synchronisiermechanismus (11, 12, 13) betätigt; ein Rückwärtsgangschaltelement (25, 28), an dem die Schaltwahlwelle (20) angeordnet ist, verbunden zu werden, wenn die Schaltwahlwelle (20) den Wahlvorgang ausführt, so dass eine Rückwärtsgangwahlposition (P4) erreicht wird, und das angeordnet ist, entsprechend des Schaltvorgangs der Schaltwahlwelle (20) einen Gangschaltvorgang zum Wählen eines Rückwärtsgangs auszuführen; und ein Verzahnungsgeräuschvermeidungssystem mit:
einem ersten Aufsatz (61), der angeordnet ist, gemeinsam mit der Schaltwahlwelle (20) zu drehen, wenn die Schaltwahlwelle (20) den Wahlvorgang zum Wählen eines Rückwärtsgangs ausführt;
mindestens einem Zwischenaufsatz (62), der angeordnet ist, unter der Verwendung einer Drehkraft von dem ersten Aufsatz (61) zu drehen, der gemeinsam mit der Schaltwahlwelle (20) dreht; und
einem Vorsynchronisieraufsatz (63), der an der ersten Vorwärtsganggabelwelle (53) vorgesehen ist und der angeordnet ist, die erste Vorwärtsganggabelwelle (53) in die axiale Richtung zu bewegen, indem er eine Drehkraft von dem Zwischenaufsatz (62) verwendet, wodurch er den Synchronisiermechanismus während eines Zeitraums betätigt, in dem die Schaltwahlwelle (20) den Wahlvorgang zum Wählen eines Rückwärtsgangs ausführt, und wobei der Zwischenaufsatz (62) auf eine derartige Weise angeordnet ist, dass der Zwischenaufsatz (62) in die axiale Richtung der Schaltwahlwelle (20) bewegbar ist, und wenn die Schaltwahlwelle (20) von einer Schaltposition für einen Rückwärtsgang zu einer neutralen Position zurückgebracht ist, der Zwischenaufsatz (62) angeordnet ist, sich durch eine Druckkraft, die in der axialen Richtung von dem Aufsatz (61) auf den Zwischenaufsatz (62) aufgebracht wird, in die axiale Richtung zu bewegen; **dadurch gekennzeichnet, dass**
der Zwischenaufsatz (62) von einer zweiten Vorwärtsganggabelwelle (52) gehalten, relativ zu der zweiten Vorwärtsganggabelwelle (52) drehbar und in der axialen Richtung relativ zu der zweiten Vorwärtsganggabelwelle (52) bewegbar ist.

2. Verzahnungsgeräuschvermeidungssystem nach Anspruch 1, **dadurch gekennzeichnet, dass** ein druckaufbringender Vorsynchronisiernasenabschnitt (62C), der sich in eine radiale Richtung nach außen von dem Zwischenaufsatz (62) erstreckt, an einem äußeren Umfang des Zwischenaufsatzes (62) vorgesehen ist, und ein druckaufnehmender Vorsynchronisiernasenabschnitt (63b), der sich in eine radiale Richtung nach außen von dem Vorsynchronisieraufsatz (63) erstreckt, an einem äußeren Umfang des Vorsynchronisieraufsatzes (63) vorgesehen ist, um die Drehkraft des Zwischenaufsatzes (62) in eine Kraft umzuwandeln, die die erste Vorwärtsganggabelwelle (53) in die axiale Richtung bewegt.

3. Verzahnungsgeräuschvermeidungssystem nach Anspruch 1 oder 2, ferner **gekennzeichnet durch**:
einen Stopper, der angeordnet ist, wenn die Drehkraft von dem Zwischenaufsatz (62) auf den Vorsynchronisieraufsatz (63) aufgebracht wird, um die erste Vorwärtsganggabelwelle (53) in die axiale Richtung zu bewegen, eine Bewegung des Zwischenaufsatzes (62) in der axialen Richtung zu begrenzen, die eine Richtung einer Aufbringung einer Reaktionskraft von dem Vorsynchronisieraufsatz (63) ist, so dass der Zwischenaufsatz (62) die Reaktionskraft von dem Vorsynchronisieraufsatz (63) empfängt.

4. Verzahnungsgeräuschvermeidungssystem nach einem der Ansprüche 1 bis 3, **dadurch gekennzeichnet, dass** das Verzahnungsgeräuschvermeidungssystem auf eine derartige Weise aufgebaut ist, dass, während des Gangschaltvorgangs zum Wählen eines Rückwärtsgangs, wenn die Schaltwahlwelle (20) den Schaltvorgang ausführt, so dass eine Rückwärtsgangschaltposition erreicht wird, der erste Aufsatz (61) angeordnet ist, sich in die axiale Richtung entsprechend der Bewegung der Schaltwahlwelle (20) in der axialen Richtung zu bewegen, wobei die Bewegung des ersten Aufsatzes (61) in der axialen Richtung bewirkt, dass der erste Aufsatz (61) sich von dem Zwischenaufsatz (62) in die axiale Richtung zurückbewegt, um ein Aufbringen einer Drehkraft auf den Zwischenaufsatz (62) zu beenden, und ein Aufbringen einer Vorspannkraft von dem Zwischenaufsatz (62) zu dem Vorsynchronisieraufsatz (63), um die Vorwärtsganggabelwelle (53) in die axiale Richtung zu bewegen, beendet wird.

5. Verzahnungsgeräuschvermeidungssystem nach Anspruch 5, ferner **gekennzeichnet durch**:
eine Vorspanneinrichtung (65), die angeordnet ist, eine Vorspannkraft auf den Zwischenaufsatz (62) aufzubringen, um den Zwischenaufsatz (62) in Richtung einer Anfangsposition in einer Rotationsrichtung zu bewegen, in der die Drehkraft von dem ersten Aufsatz (61) nicht auf den Zwischenaufsatz (62) aufgebracht wird, und eine Vorspannkraft, um den Zwischenaufsatz (62) in Richtung einer Anfangsposition in der axialen Richtung zu bewegen, an der die Druckkraft in der axialen Richtung von dem ersten Aufsatz (61) nicht auf den Zwischenaufsatz (62) aufgebracht wird.

## Revendications

1. Transmission manuelle qui comprend un arbre sélecteur de vitesses (20) agencé pour effectuer une opération de sélection en tournant autour d'un axe de l'arbre sélecteur de vitesses (20) et agencé pour effectuer une opération de changement en se déplaçant dans une direction axiale de l'arbre sélecteur de vitesses (20) pendant une opération de changement de vitesse, un premier arbre (53) de fourchette de marche avant auquel l'arbre sélecteur de vitesses (20) est relié quand l'arbre sélecteur de vitesses (20) effectue l'opération de sélection afin que soit atteinte une position de sélection (P1, P2, P3) de marche avant prédéterminée et qui est agencé pour se déplacer dans la direction axiale conformément à l'opération de changement de l'arbre sélecteur de vitesses (20) et est agencé pour effectuer une opération de changement de vitesse afin de sélectionner une marche avant prédéterminée tout en faisant fonctionner un mécanisme de synchronisation (11, 12, 13), un élément (25, 28) de changement de marche arrière auquel l'arbre sélecteur de vitesses (20) est agencé pour être relié quand l'arbre sélecteur de vitesses (20) effectue l'opération de sélection afin que soit atteinte une position de sélection (P4) de marche arrière et qui est agencé pour effectuer une opération de changement de vitesse afin de sélectionner la marche arrière conformément à l'opération de changement de l'arbre sélecteur de vitesses (20) et un système de prévention du bruit d'engrenage comprenant :
un premier élément de tête (61) qui est agencé pour tourner en même temps que l'arbre sélecteur de vitesses (20) quand l'arbre sélecteur de vitesses (20) effectue l'opération de sélection pour sélectionner la marche arrière ;
au moins un élément de tête intermédiaire (62) qui est agencé pour tourner en utilisant la force de rotation provenant du premier élément de tête (61) qui tourne en même temps que l'arbre sélecteur de vitesses (20) ; et
un élément de tête (63) avant bague de friction qui est monté sur le premier arbre (53) de fourchette de marche avant et qui est agencé pour déplacer le premier arbre (53) de fourchette de marche avant dans la direction axiale en utilisant la force de rotation provenant de l'élément de tête intermédiaire (62), faisant de ce fait fonctionner le mécanisme de synchronisation pendant la période durant laquelle l'arbre sélecteur de vitesses (20) effectue l'opération de sélection pour sélectionner la marche arrière et l'élément de tête intermédiaire (62) étant agencé de telle manière que l'élément de tête intermédiaire (62) est mobile dans la direction axiale de l'arbre sélecteur de vitesses (20) et, quand l'arbre sélecteur de vitesses (20) est ramené au point mort depuis la position de changement pour marche arrière, l'élément de tête intermédiaire (62) étant agencé pour se déplacer dans la direction axiale sous l'effet d'une force de pression que le premier élément de tête (61) applique à l'élément de tête intermédiaire (62) dans la direction axiale,
**caractérisée en ce que** l'élément de tête intermédiaire (62) est porté par un deuxième arbre (52) de fourchette de marche avant et est rotatif par rapport au deuxième arbre (52) de fourchette de marche avant et est mobile dans la direction axiale par rapport au deuxième arbre (52) de fourchette de marche avant.

2. Système de prévention du bruit d'engrenage selon la revendication 1, **caractérisé en ce qu'**une partie d'oreille (62c) d'application d'une pression avant bague de friction, qui s'étend vers l'extérieur dans une direction radiale de l'élément de tête intermédiaire (62), est disposée à la périphérie extérieure de l'élément de tête intermédiaire (62) et qu'une partie d'oreille (63b) de réception d'une pression avant bague de friction, qui s'étend vers l'extérieur dans une direction radiale de l'élément de tête (63) avant bague de friction, est disposée à la périphérie extérieure de l'élément de tête (63) avant bague de friction afin de convertir la force de rotation de l'élément de tête intermédiaire (62) en une force qui déplace le premier arbre (53) de fourchette de marche avant dans la direction axiale.

3. Système de prévention du bruit d'engrenage selon la revendication 1 ou 2, **caractérisé en ce qu'**il comprend en outre une butée qui est agencée pour limiter, quand la force de rotation est transmise de l'élément de tête intermédiaire (62) à l'élément de tête (63) avant bague de friction afin de déplacer le premier arbre (53) de fourchette de marche avant dans la direction axiale, un mouvement de l'élément de tête intermédiaire (62) dans la direction axiale qui est la direction d'application d'une force de réaction venant de l'élément de tête (63) avant bague de friction de sorte que l'élément de tête intermédiaire (62) reçoive la force de réaction venant de l'élément de tête (63) avant bague de friction.

4. Système de prévention du bruit d'engrenage selon l'une quelconque des revendications 1 à 3, **caractérisé en ce qu'**il est structuré de telle manière que, pendant l'opération de changement de vitesse pour sélectionner la marche arrière, quand l'arbre sélecteur de vitesses (20) effectue l'opération de changement afin que soit atteinte une position de changement en marche arrière, le premier élément de tête (61) est agencé pour se déplacer dans la direction axiale conformément au mouvement de l'arbre sélecteur de vitesses (20) dans la direction axiale, le mouvement du premier élément de tête (61) dans la direction axiale fait se retirer le premier élément de tête (61) de l'élément de tête intermédiaire (62) dans la direction axiale pour mettre fin à l'application de la force de rotation à l'élément de tête intermédiaire (62) et cela met fin à l'application d'une force de rappel de l'élément de tête intermédiaire (62) sur l'élément de tête (63) avant bague de friction pour déplacer l'arbre (53) de fourchette de marche avant dans la direction axiale.

5. Système de prévention du bruit d'engrenage selon la revendication 5, **caractérisé en ce qu'**il comprend en outre un moyen de rappel (65) agencé pour fournir à l'élément de tête intermédiaire (62) une force de rappel pour ramener l'élément de tête intermédiaire (62) vers sa position initiale dans la direction de rotation, à laquelle position la force de rotation venant du premier élément de tête (61) n'est pas appliquée à l'élément de tête intermédiaire (62), et une force de rappel pour déplacer l'élément de tête intermédiaire (62) vers sa position initiale dans la direction axiale, à laquelle position la force de pression dans la direction axiale venant du premier élément de tête (61) n'est pas appliquée à l'élément de tête intermédiaire (62).
